# EUROPEAN PATENT APPLICATION

(11) **EP 4 843 642 A1**
(43) Date of publication of application: **25.11.2026**
(21) Application number: 25808844.2
(22) Date of filing: 25.03.2025
(51) Int. Cl.: A63F 13/55, A63F 13/50

(54) **DATA SYNCHRONIZATION METHOD AND APPARATUS, AND SERVER, STORAGE MEDIUM AND PROGRAM PRODUCT**

(30) Priority: 06.05.2024 CN 202410551542
(71) Applicant: Tencent Technology (Shenzhen) Company Limited, Shenzhen, Guangdong 518057 (CN)
(72) Inventor: ZHOU, Yuan, Shenzhen, Guangdong 518057 (CN); WANG, Yachang, Shenzhen, Guangdong 518057 (CN); ZHONG, Jianbin, Shenzhen, Guangdong 518057 (CN)
(74) Representative: EP&C
(86) International application number: PCT/CN2025/084675
(87) International publication number: WO 2025/232370

(57) **Abstract**

A data synchronization method and apparatus, and a server, a storage medium and a program product, which relate to the technical field of the Internet. The method comprises: when a virtual character moves to a first position in a first cell, on the basis of first character data of the virtual character in the first cell, using the durations of at least two frames to create second character data of the virtual character in a second cell, wherein the first character data is in a first state, the second character data is in a second state, and data in the second state is passively updated when data in the first state changes (901); when the first character data changes, synchronizing changed data of actors to the second cell (902); and when the virtual character moves to a second position in the second cell, switching the first character data to the second state, and switching the second character data to the first state (903).

## Description

### RELATED APPLICATION

This application claims priority to Chinese Patent Application No. 202410551542.1, entitled "DATA SYNCHRONIZATION METHOD AND APPARATUS, SERVER, STORAGE MEDIUM, AND PROGRAM PRODUCT" filed on May 6, 2024, which is incorporated herein by reference in its entirety.

### FIELD OF THE TECHNOLOGY

Embodiments of this application relate to the field of Internet technologies, and in particular, to a data synchronization method and apparatus, a server, a storage medium, and a program product.

### BACKGROUND OF THE DISCLOSURE

A large-world game engine (BigWorld) is a game engine that provides a complete technical solution for a seamless large world, and is configured to divide a game world (Space) into different regions (Cell). To enable virtual characters in different regions to perceive each other, object data of the virtual characters needs to be synchronized between the regions by using a Real-Ghost mechanism (a primary-backup data synchronization mechanism). In the Real-Ghost mechanism, when a virtual character in a first region enters a field of view of a second region, the first region maintains object data in a Real state, the second region maintains object data in a Ghost state, and the object data in the Ghost state is obtained by synchronizing the object data in the Real state. By using the Real-Ghost mechanism, a player in the second region may see the virtual character in the first region. Therefore, the player may feel as if moving in a complete game world, unaware of data migration and flow between different regions.

In a related technology, when the virtual character moves from the first region to the second region, Real-Ghost migration may occur. In this case, full object data of the virtual character in the first region may be synchronously migrated to the second region, the object data maintained in the first region is switched to the Ghost state, and the object data maintained in the second region is switched to the Real state. Since a virtual character may include a plurality of virtual objects (actors), for example, a character object controlled by a player, an equipment object worn by the character object, and a prop object in a backpack, and each virtual object may have a plurality of components attached, a data volume of the full object data of the virtual character is generally relatively large.

To ensure consistency of the object data of the virtual character in the first region and the second region, when Real-Ghost migration occurs, the full object data of the virtual character maintained in the first region needs to be completely and synchronously migrated to the second region. However, for a high-frame-rate game, since a single frame has a relatively short duration, when the data volume of the full object data of the virtual character is relatively large, a duration required to migrate the full object data between different regions exceeds the duration of the single frame, and a data migration process lasts for several frames, which may cause problems such as frame stuttering.

### SUMMARY

Embodiments of this application provide a method and apparatus for synchronizing character data of a virtual character across regions in a virtual world, a server, a storage medium, and a program product. The technical solutions are as follows:

According to one aspect, an embodiment of this application provides a method for synchronizing character data of a virtual character across regions in a virtual world, performed by a computer device, the method including:
when the virtual character moves to a first position in a first region of the virtual world, synchronizing first character data of the virtual character in the first region to a second region adjacent to the first region to create second character data of the virtual character in the second region, wherein the first character data is in a first state and the second character data is in a second state, the synchronization is distributed across at least two render frame cycles;
when the first character data in the first region changes, synchronizing changed data in the first character data to the second region so that the second character data is synchronously changed based on the changed data in the first character data; and
when the virtual character moves to a second position in the second region, switching the first character data to the second state and the second character data to the first state, respectively.

According to another aspect, an embodiment of this application provides an apparatus for synchronizing character data of a virtual character across regions in a virtual world, the apparatus including:
a creation module, configured to synchronize, when a virtual character moves to a first position in a first region of the virtual world, first character data of the virtual character in the first region to a second region adjacent to the first region to create second character data of the virtual character in the second region, wherein the first character data is in a first state and the second character data is in a second state, the synchronization is distributed across at least two render frame cycles;
a change module, configured to synchronize, when the first character data in the first region changes, changed data in the first character data to the second region so that the second character data is synchronously changed based on the changed data in the first character data; and
a migration module, configured to switch the first character data to the second state the second character data to the first state respectively when the virtual character moves to a second position in the second region.

According to another aspect, an embodiment of this application provides a server, the server including a processor and a memory, the memory storing at least one computer instruction, and the at least one computer instruction being loaded and executed by the processor to implement the method according to the foregoing aspect.

According to another aspect, an embodiment of this application provides a computer-readable storage medium, the computer-readable storage medium storing at least one computer instruction, and the computer instruction being loaded and executed by a processor to implement the method according to the foregoing aspect.

According to another aspect, an embodiment of this application provides a computer program product, the computer program product including a computer instruction, and the computer instruction being stored in a computer-readable storage medium. A processor of a server reads the computer instruction from the computer-readable storage medium, and the processor executes the computer instruction, causing the server to perform the method provided in various implementations of the foregoing aspect.

In this embodiment of this application, when a virtual character moves to a first position in a first region, first character data of the virtual character in the first region is synchronized to a second region in a frame-splitting manner by using at least two frame durations (at least two render frame cycles), so that the second region acquires gradually synchronized object data to obtain second character data that represents full object data of the virtual character. Meanwhile, during movement of the virtual character to a second position in the second region, if the first character data is changed, changed data may also be synchronized to the second region, so that the second character data is synchronously updated based on the changed data. Thus, during creation of a Ghost (the second character data), the first character data is fully synchronized to the second region in a frame-splitting manner by using at least two frame durations, which can effectively avoid the problem of excessive processing pressure of the server caused by completion of full synchronization of a large amount of data within a short time (e.g., within a single frame). In addition, a large amount of object data has been synchronized when the Ghost is created and data is changed (which is referred to as a forward frame-splitting mechanism). When the virtual character moves to the second position in the second region, a data volume needing to be synchronized for Real-Ghost migration is only changed data of the virtual object corresponding to the frame, and a data volume of the changed data is relatively small. As a result, a duration of data synchronization during the Real-Ghost migration may not exceed a single frame duration, thereby greatly avoiding the problems such as frame stuttering caused by data synchronization lasting for several frames.

### BRIEF DESCRIPTION OF THE DRAWINGS

FIG. 1 is a schematic diagram of dividing a game world into different regions.
FIG. 2 is a schematic diagram of routing object data of virtual objects to corresponding regions according to position information of the virtual objects.
FIG. 3 is a schematic diagram of synchronizing object data of a virtual character in Cell 3 to Cell 2 and Cell 4 by using a Real-Ghost mechanism.
FIG. 4 is a schematic diagram of Ghost creation, Real-Ghost migration, and Ghost deletion processes.
FIG. 5 is a schematic diagram of data synchronization for object data of virtual objects by traversing a queue.
FIG. 6 is a schematic diagram of Ghost creation.
FIG. 7 is a schematic diagram of full object data of all virtual objects synchronously forming a virtual character during Real-Ghost migration.
FIG. 8 is a system architectural diagram of a computer system according to some embodiments of this application.
FIG. 9 is a flowchart of a data synchronization method according to some embodiments of this application.
FIG. 10 is a schematic diagram of creating second character data of a virtual character in a second region based on first character data of a virtual character in a first region by using at least two frame durations according to some embodiments of this application.
FIG. 11 is a schematic diagram of synchronizing changed data of a virtual object to a second region when first character data is changed, so that second character data is synchronously changed based on the changed data according to some embodiments of this application.
FIG. 12 is a schematic diagram of switching first character data to a second state, and switching second character data to a first state when a virtual character moves to a second position in a second region according to some embodiments of this application.
FIG. 13 is a schematic diagram of creating second character data in a second region according to creation priorities according to some embodiments of this application.
FIG. 14 is a schematic diagram of deleting first character data in a first region according to deletion priorities according to some embodiments of this application.
FIG. 15 is a timing diagram of Ghost creation, Real-Ghost migration, and Ghost deletion processes according to some embodiments of this application.
FIG. 16 is a schematic diagram of determining creation priorities of respective virtual objects with reference to an attach relationship between the virtual objects according to some embodiments of this application.
FIG. 17 is a schematic diagram of determining creation priorities by modifying visibility of virtual objects according to some embodiments of this application.
FIG. 18 is a system architectural diagram of a server according to some embodiments of this application.
FIG. 19 is a system architectural diagram of a data flow of a large-world game engine according to some embodiments of this application.
FIG. 20 is a schematic diagram of comparing a quantity of calculations of a large-world entity management layer between a related technology and this application according to some embodiments of this application.
FIG. 21 is a schematic diagram of comparing a quantity of calculations of a large-world entity management layer between a related technology and this application according to another exemplary embodiment of this application.
FIG. 22 is a schematic diagram of adding a virtual object to a first synchronization queue and a second synchronization queue according to some embodiments of this application.
FIG. 23 is a flowchart of adding a sleep flag to virtual objects to reduce a quantity of traversals of the virtual objects in a second synchronization queue according to some embodiments of this application.
FIG. 24 is a schematic diagram of adding a data change flag to a virtual object to determine whether to synchronize changed data of the virtual object to a second region according to some embodiments of this application.
FIG. 25 is a schematic diagram of adding a sleep flag to a virtual object to determine whether to synchronize changed data of the virtual object to a second region according to some embodiments of this application.
FIG. 26 is a schematic diagram a significant reduction in central processing unit (CPU) consumption when the method according to embodiments of this application is adopted, according to some embodiments of this application.
FIG. 27 is a schematic diagram of a performance proportion of data synchronization when the method according to embodiments of this application is adopted, according to some embodiments of this application.
FIG. 28 is a schematic diagram of maximum time consumption per frame when the operations according to embodiments of this application are adopted, according to some embodiments of this application.
FIG. 29 is a schematic diagram of a proportion of timeout frames when the method according to embodiments of this application is adopted under a stress test in which Ghost creation and Ghost deletion are frequently performed according to some embodiments of this application.
FIG. 30 is a schematic diagram of average CPU utilization when the method according to embodiments of this application is adopted, according to some embodiments of this application.
FIG. 31 is a structural block diagram of a data synchronization apparatus according to some embodiments of this application.
FIG. 32 is a schematic structural diagram of a server according to some embodiments of this application.

### DESCRIPTION OF EMBODIMENTS

To make the objectives, technical solutions, and advantages of this application clearer, implementations of this application are described in further detail below with reference to the accompanying drawings.

First, terms involved in the embodiments of this application are described.

High-frame-rate game: A frame rate refers to a quantity of frames in which an image is updated per unit time. A higher frame rate indicates a smoother visual effect during gaming. For example, a first-person shooting (FPS) game is typically at a frame rate ranging from 15 to 120 frames per second, and is a high-frame-rate game. A massively multiplayer online role-playing game (MMORPG) is typically at a frame rate ranging from 5 to 15 frames per second, and is not a high-frame-rate game. A single frame duration of the high-frame-rate game is smaller than a single frame duration of a non-high-frame-rate game. Therefore, the high-frame-rate game typically needs to process a larger data volume within the same duration. This application is described by taking a high-frame-rate game at a frame rate of 30 fps (that is, 30 frames per second) as an example.

A large-world game engine (BigWorld) is a game engine that provides a complete technical solution for a seamless large world. The BigWorld divides a game world (Space) into different areas (Cell), and data in a region is independently managed by the region. A data flow of BigWorld is divided into an index layer, a data layer, and a view layer. The index layer is also referred to as a large-world entity management layer, and is configured to manage entities in the regions. The data layer is also referred to as a dedicated service (DS) layer, and is configured to manage virtual objects (actors) in the regions. The view layer is also referred to as a presentation layer, and is configured to manage view content of a client. The entities in each region are managed by the large-world entity management layer corresponding to the region, the actors in each region are managed by the DS layer corresponding to the region, and the entities managed by the large-world entity management layer are in one-to-one correspondence with the actors managed by the DS layer.

A virtual character may be a virtual character controlled by a player, or may be a non-player character (NPC). In this embodiment of this application, the virtual character includes at least two associated virtual objects, including a primary virtual object and at least one secondary virtual object. The primary virtual object is a character object (e.g., a hero, an animation character, or a cartoon image). The secondary virtual object may be an equipment object worn by the character object (such as clothing or an accessory), a prop object in a backpack, or the like. The secondary virtual object depends on the primary virtual object. That is, when a position of the primary virtual object moves, the secondary virtual object also moves accordingly.

Virtual object (Actor): Objects in a virtual environment may be referred to as virtual objects. The virtual objects may be objects forming a virtual character or may be independent objects. For example, the virtual objects may be a primary virtual object and a secondary virtual object that form a virtual character, may be independent static objects such as doors, windows, and walls, or may be dynamic vehicle objects such as automobiles and airplanes. The type of the virtual objects is not limited in this application. Each virtual object may have various types of attributes, such as a position, an object type (e.g., a primary virtual object or a secondary virtual object), a posture, a level, and whether to be visible. The virtual objects support three-dimensional transformations, such as translation, rotation, and scaling. The virtual objects may be created or destroyed by using game logic code. The virtual objects may attach components as sub-objects thereto.

Component: Components are suitable for sharing the same behavior, such as displaying a visual representation or playing a sound. The components may also represent a project-specific concept, for example, a manner in which a vehicle interprets an input and changes a speed and a direction thereof. For example, a certain project has user-controllable vehicle objects such as a car, an airplane, and a boat, and vehicle control and movement may be implemented by changing components used by the vehicle objects.

Entity: In a game engine, an entity is also commonly known by names such as GameObject, SimulationObject, Unit, and Character. Entities are in one-to-one correspondence with the virtual objects (actors). In a Real-Ghost mechanism, whether a virtual object moves to a Ghost creation line, a Real-Ghost migration line, or a Ghost deletion line may be determined according to position information of an entity, so as to determine whether to perform an operation such as Ghost creation, Real-Ghost migration, or Ghost deletion.

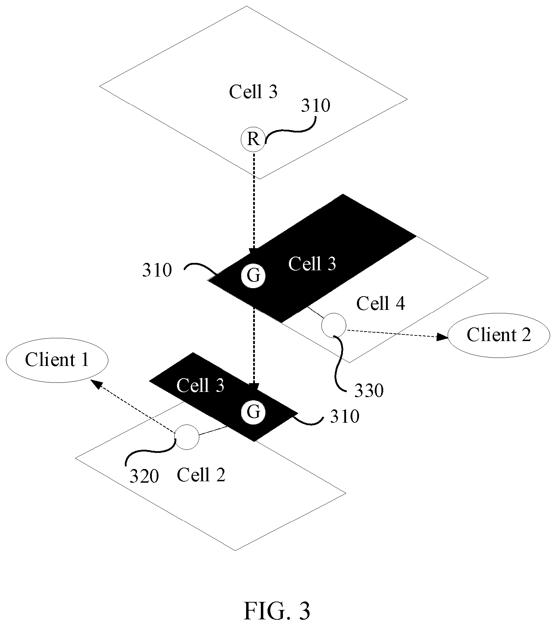

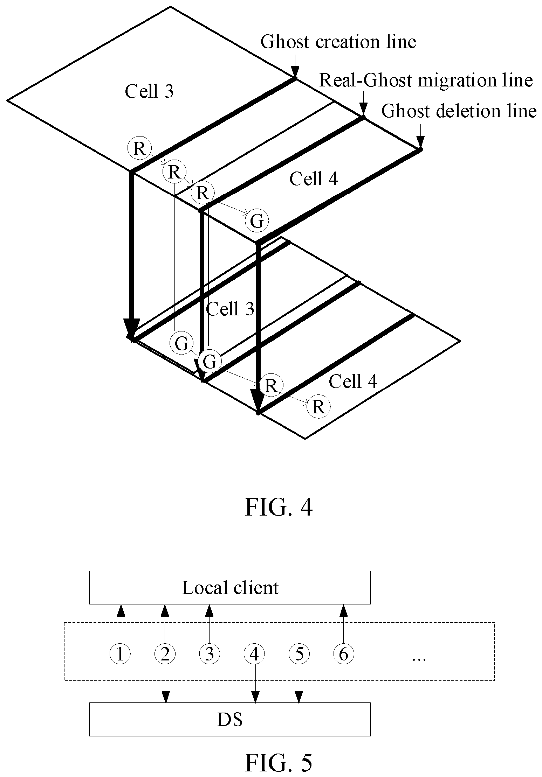

Data synchronization: Two types of data synchronization are involved in this application. The first type of data synchronization is data synchronization between a DS and a client, that is, a DS corresponding to a region synchronizes object data of virtual objects in the region to a client in the region (a client configured to view the region), so that the client can display the virtual objects in the region. The second type of data synchronization is data synchronization between DSs. That is, a DS corresponding to a first region synchronizes object data of virtual objects maintained in the first region to a DS corresponding to a second region, so that a player in the second region can also see the virtual objects in the first region. The second type of data synchronization is used in the Real-Ghost mechanism. For the Real-Ghost mechanism, refer to FIG. 3 and FIG. 4 and related descriptions thereof, and details are not described herein again. In a high-frame-rate game at a frame rate of 30 fps, data synchronization may occur 30 times per second, resulting in a relatively large synchronized data volume.

An area of interest (AOI) algorithm is a technology used by a game server to manage player characters or NPCs. The AOI algorithm determines an AOI for each region in the game world. When a player enters a certain region, the server may notify other players and NPCs within the AOI, so that they can react in time. In this way, the server can effectively manage a large quantity of objects, thereby avoiding unnecessary computation and communication.

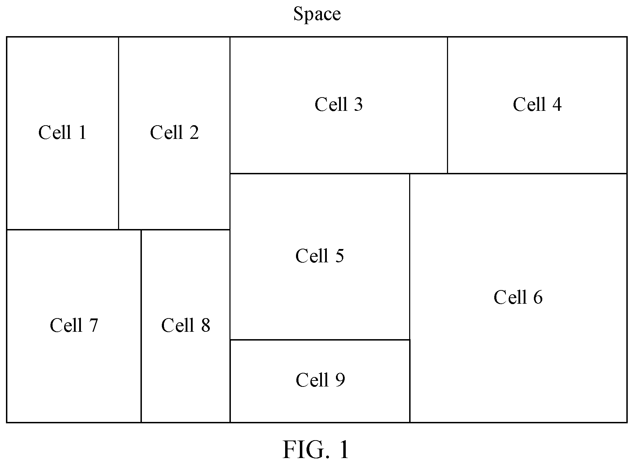

FIG. 1 is a schematic diagram of dividing a game world into different regions.

As shown in FIG. 1, a complete game world (space) may be divided into a plurality of different regions (Cell 1 to Cell 9). The quantity of the cells may alternatively be any possible quantity other than 9, and the division of the cells may alternatively be performed in any feasible manner.

Virtual objects in each region are managed by a DS corresponding to the region. Therefore, object data of a virtual object may be routed to a corresponding region according to position information of the virtual object, to determine a DS managing the virtual object.

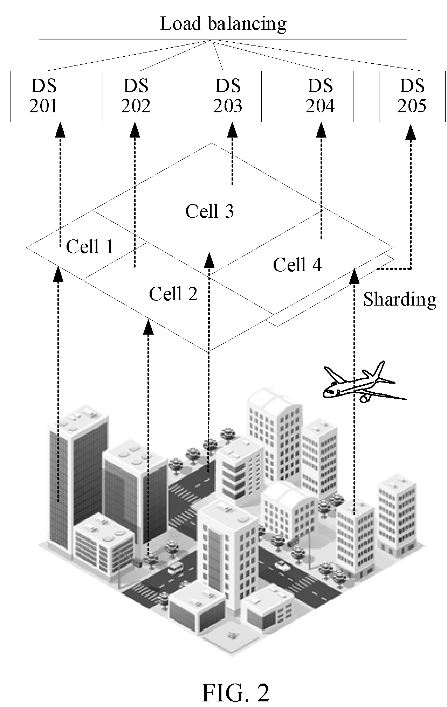

FIG. 2 is a schematic diagram of routing object data of virtual objects to corresponding regions according to position information of the virtual objects. Object data of different virtual objects in the game world may be routed to different corresponding regions according to position information. For example, in FIG. 2, object data of a virtual object "airplane" is routed to Cell 4 according to position information. Therefore, the object data of the "airplane" is managed by a DS 204 corresponding to Cell 4. Virtual objects in different regions are managed by different DSs. For example, virtual objects in Cell 1 are managed by a DS 201, virtual objects in Cell 2 are managed by a DS 202, virtual objects in Cell 3 are managed by a DS 203, and virtual objects in Cell 4 are managed by the DS 204. Load balancing is configured for adjusting quantities of virtual objects in different regions. When the quantity of virtual objects in one region (such as Cell 4) is excessive, a DS 205 may be added through sharding, to manage more virtual objects by using the DS 205.

Since the object data of the virtual object "airplane" is maintained by the DS 204 corresponding to Cell 4, if a player in another region (such as Cell 2) needs to see the airplane, the object data of the airplane in the DS 204 needs to be synchronized to the DS corresponding to the another region (e.g., the DS 202). This technology, which enables virtual objects in different regions to see each other through data synchronization, is referred to as a Real-Ghost mechanism. In this example of the airplane, the object data of the airplane maintained by the DS 204 corresponding to Cell 4 is in a Real state, object data of the airplane maintained by a DS corresponding to another region is in a Ghost state, and the object data in the Ghost state is obtained by synchronizing the object data in the Real state. Therefore, the Real-Ghost mechanism is essentially a real-time primary-standby data synchronization mode. When a virtual object moves to a different region, the different region may perform state switching on maintained object data. For example, when the airplane moves to Cell 2, object data of the airplane maintained in Cell 2 is switched to the Real state, and object data of the airplane maintained in Cell 4 is switched to the Ghost state.

In the Real-Ghost mechanism, only one DS maintains the object data in the Real state, and one or more DSs may maintain the object data in the Ghost state. For example, if players in both Cell 2 and Cell 4 can view a virtual character in Cell 3, object data maintained by the DS 203 corresponding to Cell 3 needs to be synchronized to the DS 202 corresponding to Cell 2 and the DS 204 corresponding to Cell 4. In this case, both the DS 202 and the DS 204 are DSs that maintain the object data in the Ghost state.

FIG. 3 is a schematic diagram of synchronizing object data of a virtual character in Cell 3 to Cell 2 and Cell 4 by using a Real-Ghost mechanism. In FIG. 3, a virtual character 310 in Cell 3 is represented by a circle marked with "R" to indicate that object data of the virtual character 310 maintained by the DS corresponding to Cell 3 is in the Real state. A virtual character 320 in Cell 2 is controlled by Client 1, and a virtual character 330 in Cell 4 is controlled by Client 2. To enable the virtual character 320 and the virtual character 330 to see the virtual character 310, the DS corresponding to Cell 3 synchronizes the object data of the virtual character 310 to Cell 2 and Cell 4, the virtual character 310 displayed in Ghost regions of Cell 2 and Cell 4 (shown as black regions in FIG. 3) is represented by a circle marked with "G" to indicate that the object data of the virtual character 310 maintained in Cell 2 and Cell 4 is in the Ghost state. As the virtual character moves, a complete process of the Real-Ghost mechanism includes Ghost creation, Real-Ghost migration, and Ghost deletion.

FIG. 4 is a schematic diagram of Ghost creation, Real-Ghost migration, and Ghost deletion processes. As shown in FIG. 4, during the movement of the virtual character from Cell 3 to Cell 4, three boundary lines are successively crossed, which are respectively a Ghost creation line, a Real-Ghost migration line, and a Ghost deletion line. In FIG. 4, a circle marked with "R" indicates that the object data of the virtual character is in the Real state, and a circle marked with "G" indicates that the object data of the virtual character is in the Ghost state.

Ghost creation: When the virtual character moves from Cell 3 to Cell 4 and crosses the Ghost creation line, the virtual character in Cell 3 enters a field of view of Cell 4. Therefore, to enable a player in Cell 4 to see the virtual character, the object data in the Real state maintained in Cell 3 needs to be synchronized to Cell 4. The object data of the virtual character maintained in Cell 4 is in the Ghost state.

Real-Ghost migration: When the virtual character moves from Cell 3 to Cell 4 and crosses the Real-Ghost migration line, the virtual character has entered Cell 4 from Cell 3. Therefore, the object data of the virtual character maintained in Cell 3 may be switched from the Real state to the Ghost state, and the object data of the virtual character maintained in Cell 4 may be switched from the Ghost state to the Real state.

Ghost deletion: When the virtual character moves from Cell 3 to Cell 4 and crosses the Ghost deletion line, the virtual character has entered Cell 4 and left a field of view of Cell 3. Therefore, to achieve an effect that a player in Cell 3 cannot see the virtual object, the object data of the virtual character maintained in Cell 3 needs to be deleted. The object data of the virtual character maintained in Cell 4 remains in the Real state.

FIG. 5 is a schematic diagram of synchronizing object data of virtual objects by traversing a queue.

As shown in FIG. 5, various virtual objects are managed by using a queue, and position relationships between each virtual object and a Ghost creation line, a Real-Ghost migration line, as well as a Ghost deletion line are determined by traversing the queue, thereby determining whether object data of the virtual object needs to be synchronized to another region. In addition, when the virtual object is within a field of view of a local client, the object data of the virtual object further needs to be synchronized to the local client. For example, the queue in FIG. 5 includes a virtual object 1 to a virtual object 6. Object data of the virtual objects 1, 3, and 6 needs to be synchronized to the local client, object data of the virtual objects 4 and 5 needs to be synchronized to a DS of another region, and object data of the virtual object 2 needs to be synchronized to the local client and the DS of the another region.

If various virtual objects in a virtual environment are managed by using a queue, when there are a larger quantity of virtual objects, a quantity of traversals is larger, and a position determination needs to be performed on each traversed virtual object (for example, position relationships between a virtual character formed by the virtual object and the Ghost creation line, the Real-Ghost migration line, as well as the Ghost deletion line are separately determined), leading to relatively high computational overhead. Since the virtual character includes a larger quantity of virtual objects and each virtual object (actor) may further have a plurality of components, during the Ghost creation, creating object data of the virtual character requires a large quantity of memory allocation and initialization operations, and created virtual objects and components further need to execute gameplay-related logic (such as activation logic and notification logic), resulting in a typically long duration (exceeding 150 ms) for creating the object data of the virtual character. Therefore, typically, only part of data of the virtual object is synchronized in the Ghost creation process.

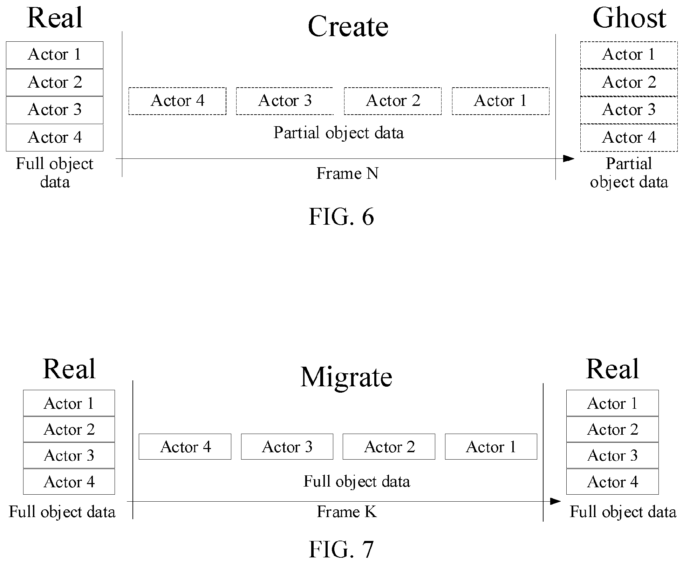

FIG. 6 is a schematic diagram of Ghost creation. Full object data is shown with solid lines, and partial object data is shown with dashed lines. As shown in FIG. 6, object data of virtual objects maintained in the first region is in the Real state, and includes object data of virtual objects forming a virtual character (full object data of Actor 1 to Actor 4).

In the Ghost creation process, only partial object data (shown with dashed lines) of each virtual object is synchronized within a frame duration (a duration of Frame N). Therefore, object data of the virtual character synchronized to and maintained in the second region includes only the partial object data of each virtual object, and the partial object data of the virtual object maintained in the second region is in the Ghost state.

In the Real-Ghost migration process, the object data of the virtual objects forming the virtual character needs to be switched from the Real state to the Ghost state within one frame. If the migration is performed step by step, development difficulty may be increased, and a state needs to be set separately for the object data corresponding to each virtual object forming the virtual character.

The step-by-step migration means that within one frame, one part of the virtual objects forming the virtual character are switched from the Real state to the Ghost state, while the other part of the virtual objects forming the virtual character remain in the Ghost state. If the step-by-step migration is adopted in the Real-Ghost migration process, within one frame, one part of the virtual objects forming the virtual character are switched from the Real state to the Ghost state, while the other part of the virtual objects forming the virtual character remain in the Ghost state. Therefore, a state needs to set separately for the object data corresponding to each virtual object forming the virtual character, leading to increased development difficulty.

If the step-by-step migration is not adopted, since the first region synchronizes only partial object data of the virtual character to the second region during the Ghost creation, full object data of all the virtual objects forming the virtual character needs to be synchronized to the second region within one frame of Real-Ghost migration.

FIG. 7 is a schematic diagram of full object data of all virtual objects synchronously forming a virtual character during Real-Ghost migration. As shown in FIG. 7, object data of virtual objects maintained in the first region is in the Real state, and includes object data of virtual objects forming a virtual character (full object data of Actor 1 to Actor 4).

To ensure consistency of the object data of the virtual character in the first region and the second region, when Real-Ghost migration occurs, the full object data of the virtual character maintained in the first region needs to be completely and synchronously migrated to the second region within a frame duration (a duration of Frame K). However, for a high-frame-rate game, since a single frame has a relatively short duration, when the data volume of the full object data of the virtual character is relatively large, a duration required to migrate the full object data between different regions exceeds the duration of the single frame, and a data migration process lasts for several frames, which may cause problems such as frame stuttering.

Therefore, this application provides a data synchronization method. By using a forward frame-splitting mechanism, the full object data that needs to be synchronized within one frame in which Real-Ghost migration occurs is distributed over frames prior to the Real-Ghost migration, thereby reducing a data volume synchronized during the Real-Ghost migration and avoiding frame stuttering.

In this application, description is based on an example in which the data synchronization method is applied to a large-world game application. In fact, the data synchronization method provided in this application may also be applied to other types of game applications, map applications, video applications, or any other possible applications, which is not limited in this application.

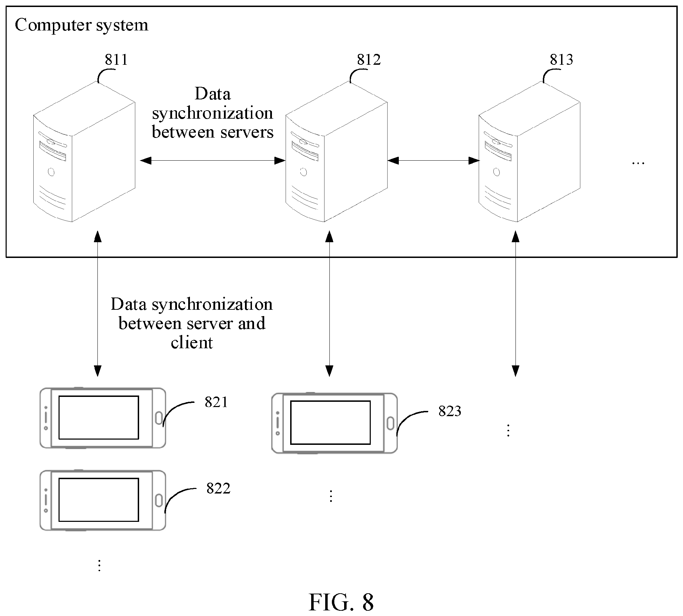

FIG. 8 is a system architectural diagram of a computer system according to some embodiments of this application.

As shown in FIG. 8, in some embodiments, the computer system may include a plurality of servers, and each server is configured to maintain a region in the game world. For example, a server 811 is configured to maintain a first region, a server 812 is configured to maintain a second region, a server 813 is configured to maintain a third region, and the like. In this manner, each server may be referred to as a DS. In another possible implementation, a single server in the computer system may include different processes, and each process is configured for maintaining one region in the game world. In this manner, each process may be referred to as a DS.

In an example in which each server is configured to maintain one region in the game world, in two types of data synchronization involved in this application, the first type of data synchronization is data synchronization between the server and the client. A server corresponding to a region synchronizes object data of a virtual object in the region to a client in the region, so that the client can display the virtual object in the region. For example, object data of a virtual object A in a region corresponding to the server 811 is synchronized to a client 821 and a client 822 in the region. Therefore, the client 821 and the client 822 can display the virtual object A.

The second type of data synchronization is data synchronization between servers. A server corresponding to one region synchronizes object data of a virtual object maintained in this region to a server corresponding to another region, so that a player in the another region can also see the virtual object in this region. The second type of data synchronization is used in the Real-Ghost mechanism. For example, the server 811 synchronizes the object data of the virtual object A maintained in this region to the server 812. The object data maintained by the server 811 is in the Real state, and the object data maintained by the server 812 is in the Ghost state. After the server 812 synchronizes the object data of the virtual object A to the client 823 in another region by using the first type of data synchronization, the client 823 can display the virtual object A in the region corresponding to the server 811 by using the Real-Ghost mechanism.

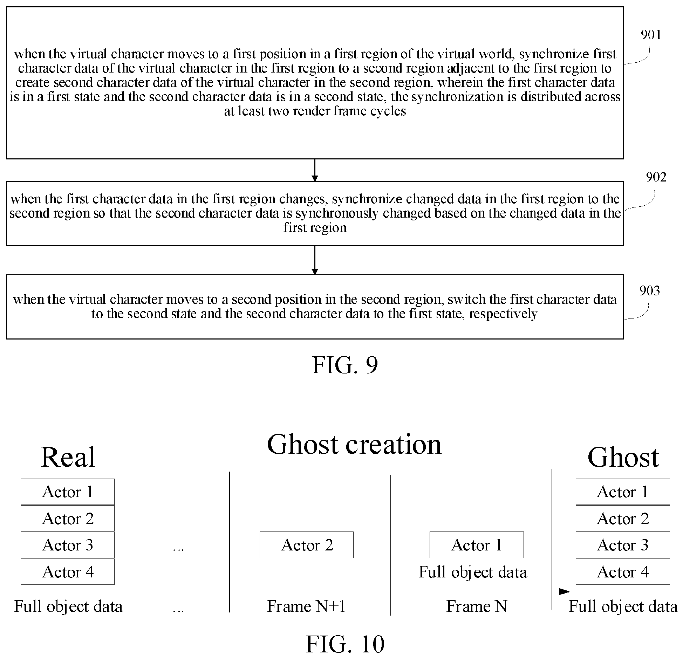

FIG. 9 is a flowchart of a data synchronization method according to some embodiments of this application. In some embodiments, the method is performed by a server. The method includes the following operations.

Operation 901: when the virtual character moves to a first position in a first region of the virtual world, synchronize first character data of the virtual character in the first region to a second region adjacent to the first region to create second character data of the virtual character in the second region, wherein the first character data is in a first state and the second character data is in a second state, the synchronization is distributed across at least two render frame cycles. For example, create, when a virtual character moves to a first position in a first region, second character data of the virtual character in a second region based on first character data of the virtual character in the first region by using at least two frame durations (also referred to as at least two render frame cycles), the virtual character including at least two virtual objects, the first character data and the second character data each including object data respectively corresponding to the at least two virtual objects, the first character data being in a first state, the second character data being in a second state, and the data in the second state being passively updated when the data in the first state is changed. In some embodiments, the virtual character is composed of at least two virtual objects, the synchronization is distributed across at least two render frame cycles by: selecting at least one virtual object from among the at least two virtual objects, and synchronizing object data of the selected at least one virtual object over a first part of the at least two render frame cycles, and synchronizing object data of remaining virtual objects over a remaining part of the at least two render frame cycles

The virtual character may be a character controlled by a player, or may be an NPC. The virtual character may be a virtual person, a virtual animal, an animation character, or the like. The virtual objects may be displayed by using a two-dimensional or three-dimensional model.

The virtual character includes at least two virtual objects. In some embodiments, the virtual objects forming the virtual character include a primary virtual object and at least one secondary virtual object. The primary virtual object is a character object (e.g., a certain hero, character, or person). The secondary virtual object may be an equipment object worn by the character object (such as clothing or an accessory), a prop object in a backpack (such as an item to be used), an effect display object (such as a special effect), or the like.

In some embodiments, the at least two virtual objects forming the virtual character have an association relationship. The association relationship between the virtual objects includes an attach relationship. For example, the secondary virtual object depends on the primary virtual object. That is, when a position of the primary virtual object moves, the secondary virtual object also moves accordingly. The secondary virtual object synchronously moves with the primary virtual object, which may achieve a movement effect of the virtual character.

In some embodiments, the attach relationship between the virtual objects includes a carrying relationship. For example, if a character object of a virtual character carries an equipment object, the carrying relationship between the character object and the equipment object is an attach relationship.

In some embodiments, the association relationship between the virtual objects further includes a loading relationship. For example, if a virtual character has a prop object "treasure box" and an equipment object "fan" is loaded in the "treasure box", the loading relationship between the prop object "treasure box" and the equipment object "fan" is an association relationship.

In some embodiments, the association relationship between the virtual objects further includes a control relationship. For example, if a character object of a virtual character drives a vehicle object (such as an automobile or an airplane), the control relationship between the character object and the vehicle object is an association relationship.

The association relationship between the virtual objects may further include any other game logic-level relationships, for example, two secondary virtual objects depend on the same primary virtual object, or when one of the secondary virtual objects is invisible, the other secondary virtual object is also invisible, which is not limited. The game world is divided into different regions, and the first region and the second region are two different regions. A region in the game world maintains object data of virtual objects in the region.

In some embodiments, the object data of the virtual objects is maintained by using a DS. For example, positions, object types (e.g., a primary virtual object or a secondary virtual object, or an equipment object or a prop object), postures, levels, whether to be visible, and attributes of the virtual objects are maintained by using the DS. The type of the object data is not limited in this application. In some embodiments, object data of virtual objects in different regions is maintained by using different DSs, and the regions and the DSs are in one-to-one correspondence. Different DSs corresponding to different regions may be different servers, or may be different processes in the same server.

In some embodiments, entities corresponding to the virtual objects are managed in each region by using a large-world entity management layer, and the virtual objects and the entities are in one-to-one correspondence. In the Real-Ghost mechanism, whether a virtual object moves to a specific region may be determined according to position information of an entity, thereby determining whether to perform an operation such as Ghost creation, Real-Ghost migration, or Ghost deletion.

In some embodiments, the first position is a boundary position that is in the first region and configured for determining whether to perform Ghost creation. In some embodiments, the first position may alternatively be referred to as a Ghost creation line, and the first position may be a straight line, a curved line, or an irregular boundary line, which is not limited. In some embodiments, the first position may be determined by the server according to a field of view within which a virtual object in the first region can appear in the second region.

In the Real-Ghost mechanism, the object data of the virtual objects is in one of the first state and the second state. The first state is also referred to as the Real state, and the second state is also referred to as the Ghost state. In some embodiments, the object data in the Ghost state is obtained by synchronizing the object data in the Real state. For example, the first character data in the Real state in the first region is synchronized to the second region, to create the second character data in the Ghost state in the second region. Therefore, the object data in the Ghost state may be considered as backup data or mirror data of the object data in the Real state.

The data in the second state is passively updated when the data in the first state is changed. That is, the object data in the Ghost state may not be actively updated. Instead, when the object data in the Real state is updated, the object data in the Real state is passively updated in a data synchronization manner. For example, the first region maintains the first character data of the virtual character in the Real state, and the second region maintains the second character data of the virtual character in the Ghost state. When another virtual character in the second region initiates an attack operation on the virtual character, causing a change in the object data of the virtual character (e.g., a decrease in an energy value), the second character data (in the Ghost state) of the virtual character maintained in the second region may not be actively updated. Instead, first, the first character data (in the Real state) of the virtual character maintained in the first region is actively updated according to the attack operation of the another virtual character. Then, the DS corresponding to the first region synchronizes changed data of the virtual character to the DS corresponding to the second region, so that the second character data (in the Ghost state) of the virtual character maintained in the second region is synchronously updated based on the changed data, thereby maintaining consistency with the first character data (in the Real state) of the virtual character maintained in the first region. When the virtual character moves from the first region to the second region, before the virtual character moves to the first position, only the first region maintains the first character data of the virtual character, and a state of the first character data is the first state (the Real state). The first character data includes object data of a virtual object. In this case, the second region does not maintain the object data of the virtual character. Therefore, in this case, a player in the second region cannot see the virtual object in the first region.

In some embodiments, the first character data includes full object data of the virtual character. For example, if the virtual character includes 4 virtual objects, which are Actor 1 to Actor 4, the first character data of the virtual character includes full object data of Actor 1 to Actor 4.

When the virtual character moves from the first region to the second region, Ghost creation in the second region is triggered when the virtual object moves to the first position. That is, the second character data of the virtual character is created in the second region based on the first character data of the virtual character in the first region. The second character data is in the second state (the Ghost state), and the data in the second state is backup for data in the first state.

The second character data includes the object data of the virtual objects. In some embodiments, the first character data of the virtual character in the first region may be fully synchronized to the DS corresponding to the second region by using the DS corresponding to the first region, to create the second character data of the virtual character in the second region.

In some embodiments, the second character data also includes the full object data of the virtual character. For example, if the virtual character includes 4 virtual objects, which are Actor 1 to Actor 4, the second character data maintained in the second region includes full object data of Actor 1 to Actor 4.

In some embodiments, the first character data and the second character data of the virtual character each include full object data of each virtual object, and the full object data is a combination of the object data respectively corresponding to the at least two virtual objects. That is, the first character data includes the object data respectively corresponding to the at least two virtual objects, and the second character data also includes the object data respectively corresponding to the at least two virtual objects.

Partial object data in the first character data is synchronized within a first frame duration of the at least two frame durations.

Illustratively, a virtual character includes at least two virtual objects, and each virtual object may also include various types of components, so a data synchronization volume during the Ghost creation is large. To avoid frame stuttering caused by performing Ghost creation within one frame duration, in the method provided in this embodiment, a backward frame-splitting mechanism is adopted. That is, the second character data of the virtual character is created in the second region based on the first character data of the virtual character in the first region by using at least two frame durations, thereby distributing the large data synchronization volume during the Ghost creation over different frames.

For example, the first frame duration is any part of the at least two frame durations, the first character data includes the object data respectively corresponding to the at least two virtual objects, and when the second character data is created by using the at least two frame durations, each of the at least two frame durations is responsible for taking a creation task of part of the object data, so that the first character data is distributed to the at least two frame durations for respective processing.

In some embodiments, some virtual objects may be extracted from the virtual objects forming the virtual character, which are preferentially synchronized by using one frame duration by using the duration of one frame, and then the remaining virtual objects are synchronized by using at least one frame duration, thereby implementing Ghost creation based on the backward frame-splitting mechanism. In another possible implementation, virtual objects having a greater degree of visual impact may be preferentially synchronized by using a duration of one frame, and then the remaining virtual objects having a lesser degree of visual impact are synchronized by using a duration of at least one frame, thereby implementing Ghost creation based on the backward frame-splitting mechanism. The virtual objects having a greater degree of visual impact may be at least one of a virtual object having a large picture display area, a virtual object having a special display effect, and a virtual object having a higher attribute value (such as higher-level equipment). A person skilled in the art may further set, according to an actual requirement, a manner of creating the second character data in the second region by using the at least two frame durations, which is not limited.

By using the at least two frame durations, a larger amount of synchronized data during the Ghost creation may be distributed into different frames by using the backward frame-splitting mechanism. Therefore, an amount of synchronized data within each frame duration is smaller, thereby avoiding the problem such as frame stuttering caused by a longer duration required for creation of the second character data of the virtual object in the second region.

A purpose of creating, by the server, the second character data of the virtual character in the second region based on the first character data of the virtual character in the first region is to enable the player in the second region to see the virtual character in the first region in time. Ghost creation typically occurs at an edge of a boundary between the first region and the second region, and thus has a lower requirement for a visual effect of the virtual character in the first region presented to the player in the second region than Real-Ghost migration (during the Real-Ghost migration, the second region needs to maintain the full object data of the virtual character). Thus, when Ghost creation is performed by using the method in this embodiment of this application, part of the object data of the virtual object is transmitted to the second region step by step by using at least two frame durations, which may not significantly affect the visual effect of the virtual character presented to the player in the second region.

FIG. 10 is a schematic diagram of creating second character data of a virtual character in a second region based on first character data of a virtual character in a first region by using at least two frame durations according to some embodiments of this application.

As shown in FIG. 10, the virtual character includes Actor 1 to Actor 4. The first character data of the virtual character maintained in the first region includes full object data of Actor 1 to Actor 4, and the first character data is in a first state (Real state).

When the virtual character in the first region moves to a first position in the first region, the full object data of Actor 1 is synchronized to the second region within a duration of Frame N, and the full object data of Actor 2 is synchronized to the second region within a duration of Frame N+1, until the second character data of the virtual character is created in the second region by using the at least two frame durations. The second character data of the virtual character maintained in the second region also includes the full object data of Actor 1 to Actor 4, and the second character data is in a second state (Ghost state).

After the second character data of the virtual character is created in the second region based on the first character data of the virtual character in the first region by using the at least two frame durations, the view layer corresponding to the second region may display the virtual character in the second region according to the maintained second character data of the virtual character. Therefore, the player in the second region can see the virtual character.

Operation 902: when the first character data in the first region changes, synchronize changed data in the first character data to the second region so that the second character data is synchronously changed based on the changed data in the first character data. For example, synchronize changed data of the virtual object to the second region when the first character data is changed, so that the second character data is synchronously changed based on the changed data.

After Ghost creation is completed, the first character data of the virtual character may be changed.

In some embodiments, the first character data of the virtual character may be changed when an operation instruction from a client for the virtual character is received. For example, when the player controls the virtual character to move, position information of each virtual object in the first character data is changed. In some embodiments, when the player equips or unequips the virtual character with equipment, visibility of the virtual object (equipment) is changed. In some other embodiments, when the server receives the operation instruction for the virtual character, the first character data of the virtual object may also be changed. For example, the virtual character meets a level-up condition, a level of the virtual character is changed. To maintain consistency between the second character data of the virtual character in the second region and the first character data of the virtual character in the first region, when the first character data is changed, the DS of the first region may synchronize changed data of the virtual object to the DS of the second region, so that the second character data is synchronously updated based on the changed data. For example, a server corresponding to the first region transmits the changed data to a server corresponding to the second region to synchronize the changed data.

The changed data is partial object data in the first character data, and the changed second character data is determined based on the second character data before the change and the changed data.

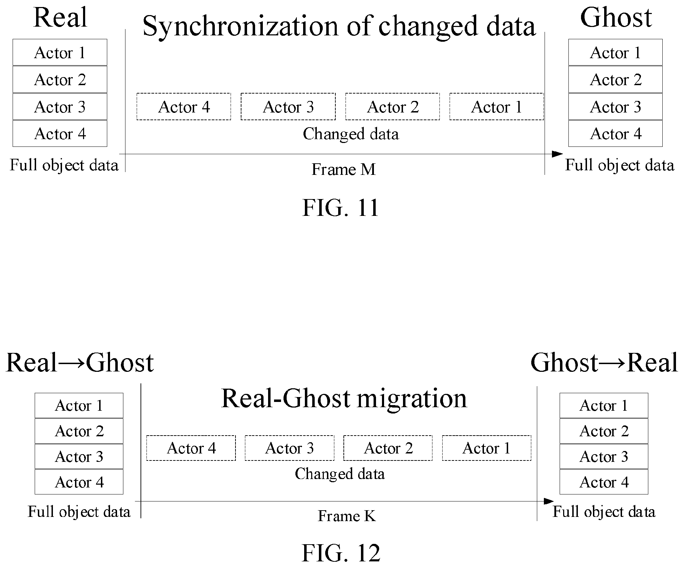

FIG. 11 is a schematic diagram of synchronizing changed data of a virtual object to a second region when first character data is changed, so that second character data is synchronously changed based on the changed data according to some embodiments of this application.

As shown in FIG. 11, the first character data of the virtual character maintained in the first region includes full object data of Actor 1 to Actor 4, and the first character data is in the first state (Real state). After Ghost creation is completed, the second character data of the virtual character maintained in the second region also includes the full object data of Actor 1 to Actor 4, and the second character data is in the second state (Ghost state).

When the first character data is changed (for example, when partial object data of Actor 1 to Actor 4 is changed), the DS of the first region synchronizes changed data of the virtual objects (partial object data updated for Actor 1 to Actor 4) to the DS of the second region, so that the DS of the second region determines the changed second character data based on the changed data and the second character data before the change, and the virtual character after the update is displayed in the second region, thereby implementing consistent synchronization between the first region and the second region for the virtual character.

When the first character data is changed, since the changed data of the first character data within each frame duration is part of the object data, a data synchronization volume is generally small, and synchronous update of the data may not cause problems such as frame stuttering.

Operation 903: when the virtual character moves to a second position in the second region, switch the first character data to the second state and the second character data to the first state, respectively. For example, switch the first character data to the second state, and switch the second character data to the first state when the virtual character moves to a second position in the second region.

In some embodiments, the second position is a boundary position that is in the second region and configured for determining whether to perform Real-Ghost migration. In some embodiments, the second position may alternatively be referred to as a Real-Ghost migration line, and the second position may be a straight line, a curved line, or an irregular boundary line, which is not limited. In some embodiments, the second position may be preset and determined by the server. For example, the second position may be a boundary line in the second region that is at a preset distance from the first region.

Before the virtual character moves from the first position in the first region to the second position in the second region, the first region maintains the first character data of the virtual character in the first state (Real state), and the second region maintains the second character data of the virtual character in the second state (Ghost state). When the virtual character moves to the second position, Real-Ghost migration is triggered to switch the first character data to the second state (Ghost state) and switch the second character data to the first state (Real state).

When the Real-Ghost migration is triggered, since the virtual character moves from another position to the second position, at least position data of the virtual character is changed within a frame duration corresponding to the triggering of the Real-Ghost migration. In addition, other types of changes may also occur to the object data of the virtual character. For example, within the frame duration corresponding to the triggering of the Real-Ghost migration, a user or a server may modify visibility of the virtual objects forming the virtual character (for example, the user replaces equipment A with equipment B), or modify a level of a virtual object (for example, the server automatically upgrades a character object after a certain duration), or modify any other possible object data.

In some embodiments, the switching the first character data to the second state, and switching the second character data to the first state when the virtual character moves to a second position in the second region includes the following operations: synchronizing, when the virtual character moves to the second position in the second region, changed data corresponding to a current frame of the virtual character in the first region to the second region, so that the second region determines changed second character data of the virtual character in the second region corresponding to the current frame based on the changed data corresponding to the current frame, changed data corresponding to other frames before the current frame, and the first character data of the virtual character before the change; and switching the first character data to the second state, and switching the second character data to the first state.

FIG. 12 is a schematic diagram of switching first character data to a second state, and switching second character data to a first state when a virtual character moves to a second position in a second region according to some embodiments of this application.

As shown in FIG. 12, when the virtual character moves to the second position in the second region within a duration of a frame (Frame K), the DS of the first region synchronizes changed data of the frame (partial object data updated for Actor 1 to Actor 4) to the DS of the second region within the duration of Frame K, so that the DS of the second region determines the changed second character data based on the changed data and the second character data before the change. Meanwhile, the first character data of the virtual character maintained in the first region is switched from the first state (Real state) to the second state (Ghost state), and the second character data of the virtual character maintained in the second region is switched from the second state (Ghost state) to the first state (Real state).

In view of the above, during creation of the second character data, the first character data is fully synchronized to the second region in a frame-splitting manner by using at least two frame durations, which can effectively avoid the problem of excessive processing pressure of the server caused by completion of full synchronization of a large amount of data within a short time (for example, within a single frame). In addition, a large amount of object data has been synchronized when the Ghost is created and data is changed (which is referred to as a forward frame-splitting mechanism). When the virtual character moves to the second position in the second region, a data volume needing to be synchronized for Real-Ghost migration is only changed data of the virtual object corresponding to the frame, and a data volume of the changed data is relatively small. As a result, a duration of data synchronization during the Real-Ghost migration may not exceed a single frame duration, thereby greatly avoiding the problems such as frame stuttering caused by data synchronization lasting for several frames.

In some embodiments, when Ghost creation is performed by using the backward frame-splitting mechanism, synchronization priorities (or referred to as creation priorities) of the object data respectively corresponding to the at least two virtual objects may be first determined; and then the second character data is created in the second region based on the first character data by using at least two frame durations according to the creation priorities. The creation priorities are configured for representing priorities for creating the object data from the first character data into the second region.

Regarding a manner of determining the creation priorities corresponding to the at least two virtual objects, in some embodiments, the creation priorities may be determined according to visibility of the virtual objects. The creation priority of the object data of a visible virtual object is higher than that of the object data of an invisible virtual object.

Illustratively, the visibility is configured for representing a state in which a virtual object is effectively observed, the visible virtual object is a virtual object that can be effectively observed, and the invisible virtual object is a virtual object that cannot be effectively observed.

For example, among the virtual objects forming the virtual character, one part of the virtual objects are visible virtual objects (such as a character object, worn equipment, and a special effect), and the other part of the virtual objects are invisible virtual objects (such as an item in a backpack or equipment in a stealth state). To enable the player in the second region to see the virtual character in time, the creation priority of the visible virtual object may be set higher than that of the invisible virtual object.

In some embodiments, the server creates, according to the creation priorities and by using a first frame duration, the object data of the visible virtual object in the second region based on the object data of the visible virtual object in the first character data.

Illustratively, the first frame duration is a preceding frame duration among the at least two frame durations, such as a frame duration of the first frame. Considering that the visible virtual object is more important for visual presentation than the invisible virtual object, the creation priority of the object data of the visible virtual object is higher, while the creation priority of the object data of the invisible virtual object is lower.

Therefore, during the creation of the second character data in the second region according to the creation priorities, the object data of the visible virtual object is preferentially created in the second region by using the first frame duration, so that the object data of the visible virtual object can be created in the second region more efficiently, and a client viewing the second region can view picture representation of the virtual object more quickly.

In some embodiments, the server may create, according to the creation priorities and by using a single frame duration, the object data of the visible virtual object in the second region based on the object data of the visible virtual object in the first character data.

Illustratively, in an example in which the first frame duration is implemented as a single frame duration, some object characters in the first character data in the first region are created into the second region by using the first frame (single frame) duration among the at least two frame durations. The some object characters herein are preferentially created object data of the visible virtual object, so that the second region includes the object data of the visible virtual object, and the object data of the visible virtual object created in the second region belongs to the second character data.

In some embodiments, when creation of the object data of the visible virtual object is completed, the object data of the invisible virtual object is created in the second region based on the object data of the invisible virtual object in the first character data by using a second frame duration.

The at least two frame durations include the first frame duration and the second frame duration. The second frame duration is a frame duration after the first frame duration. For example, the first frame duration is a frame duration of the first frame, and the second frame duration is a frame duration of the remaining frames after the first frame. When the object data of the visible virtual object is preferentially created, completion of creation of the object data of the visible virtual object is used as a condition, so that when the condition is met, the object data of the invisible virtual object with a lower priority is continuously created in the second region by using the second frame duration.

In some embodiments, when creation of the object data of the visible virtual object is completed, the object data of the invisible virtual object is created in the second region based on the object data of the invisible virtual object in the first character data by using at least one frame duration.

During creation of the first character data into the second region, by preferentially creating the object data of the visible virtual object, it can be ensured that the client observing the second region observes the visible virtual object of the virtual character in time, thereby avoiding the problem of frame stuttering of an observed picture, avoiding unnecessary waste of computing resources, and improving data loading efficiency. Then, the object data of the invisible virtual object is created, which can avoid frame stuttering, add more observation details to the observed picture, smooth gaming experience, enhance immersion, and create a more efficient and refined game environment.

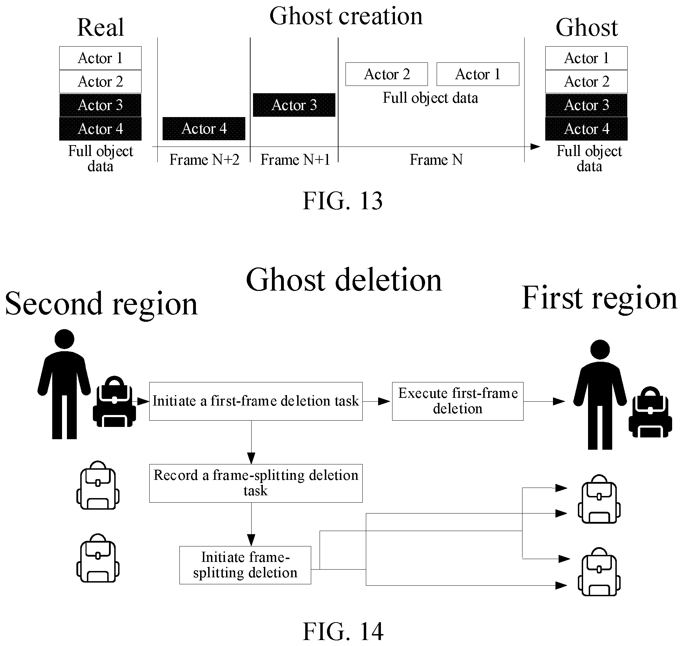

FIG. 13 is a schematic diagram of creating second character data in a second region according to creation priorities according to some embodiments of this application.

Visible virtual objects are shown as white blocks, and invisible virtual objects are shown as black blocks.

As shown in FIG. 13, the first character data of the virtual character maintained in the first region includes full object data of Actor 1 to Actor 4, and the first character data is in the first state (Real state). Actor 1 and Actor 2 are visible virtual objects, and Actor 3 and Actor 4 are invisible virtual objects.

When the virtual character in the first region moves to the first position in the first region, the full object data of the visible virtual objects (Actor 1 and Actor 2) is synchronized to the second region within a duration of Frame N, the full object data of the invisible virtual object Actor 3 is synchronized to the second region within a duration of Frame N+1, and the full object data of the invisible virtual object Actor 4 is synchronized to the second region within a duration of Frame N+2, thereby creating the second character data of the virtual character in the second region. The second character data of the virtual character maintained in the second region also includes the full object data of Actor 1 to Actor 4, and the second character data is in the second state (Ghost state).

In FIG. 13, description is only based on an example in which a quantity of actors is 4 and at least two frames are three frames: Frame N, Frame N+1, and Frame N+2. In fact, the quantity of actors and the quantity of the at least two frames may be any possible values. For example, the quantity of actors may be 150, including 30 visible virtual objects and 120 invisible virtual objects.

A manner of determining the creation priorities corresponding to the virtual objects may alternatively be determined according to other factors in some other embodiments. For example, a virtual object having a larger display area is determined as having a higher creation priority, and a virtual object having a smaller display area is determined as having a lower creation priority. In some embodiments, a virtual object having a higher level is determined as a higher creation priority, and a virtual object having a lower level is determined as a lower creation priority. The manner of determining the creation priorities is not limited.

An amount of object data of the virtual object that needs to be synchronized in each of the at least two frames may be determined according to a movement duration for the virtual character to move from the first position to the second position.

In some embodiments, the movement duration for the virtual character to move from the first position to the second position may be determined according to a movement speed of the virtual character. For example, if the movement speed of the virtual character is 12 px/s and a distance from the second position of the first position is 48 px, the movement duration is 4 s.

In some embodiments, a creation rate of the object data of the invisible virtual object may be determined according to a frame rate, the movement duration, and a quantity of invisible virtual objects. The creation rate is configured for representing an amount of object data of the invisible virtual object created within a single frame duration.

Exemplarily, the creation rate may be calculated by using the following formula: $creation rate = quantity of invisible virtual objects / \left(movement duration\times frame rate\right) .$

For example, in a high-frame-rate game at a frame rate of 30 fps, if the movement duration is 4 s and the quantity of invisible virtual objects is 120, the creation rate is 1. That is, only object data corresponding to one invisible virtual object needs to be created within a single frame duration.

The object data of the invisible virtual object is created in the second region based on the object data of the invisible virtual object in the first character data, by using at least one frame duration according to the creation rate. That is, creation of all the second character data in the second region can be completed when the virtual character moves to the second position.

In a game scenario, a movement speed of a virtual character may be faster. For example, when the virtual character moves by teleportation or rides a vehicle such as an airplane or an automobile, the movement duration from the first position to the second position may be shorter. Therefore, there is a need to ensure that all the object data that needs to be synchronized in the at least two frames is successfully created.

In the foregoing process, the creation rate of the object data is determined according to the movement speed of the virtual character. The process effectively quantifies a calculation manner of the creation rate. Since the virtual object belongs to the virtual character, the movement speed of the virtual character also represents a movement speed of the virtual object. By accurately calculating a creation rate of an invisible virtual object, reasonable resource scheduling can be implemented, and unnecessary calculation and resource waste can be avoided, thereby ensuring smooth movement of the virtual character and efficient creation of the object data, ensuring allocation of a computing task of each frame within a reasonable range, avoiding the problem of data processing overload within a frame, greatly reducing occurrence of frame stuttering, ensuring that generation of the object data in the second region may accurately depict region presentation details without exceeding a bearing capability, enhancing interaction and sense of reality between the virtual character and an environment, and greatly optimizing resource management and rendering efficiency.

In some embodiments, when Real-Ghost migration is triggered, a creation status of object data of the virtual character in the at least two frames needs to be checked.

Exemplarily, the server may compare the first character data in the first region with the second character data in the second region, to check the creation status of the object data of the virtual character in the at least two frames. When the first character data and the second character data differ greatly, it indicates that creation of the second character data of the virtual character is not fully completed. When the first character data and the second character data are consistent, it indicates that the creation of the second character data of the virtual character is fully completed.

In some embodiments, when the virtual character moves to the second position in the second region and creation of the second character data of the virtual character in the second region is fully completed, the first character data is switched to the second state, and the second character data is switched to the first state.

In some other embodiments, the first character data of the virtual character in the first region is fully synchronized to the second region when the virtual character moves to the second position in the second region and creation of the second character data of the virtual character in the second region is not fully completed. When the full synchronization is completed, the first character data is switched to the second state, and the second character data of the virtual character in the second region after the full synchronization is switched to the first state.

The full synchronization refers to completely synchronizing full first character data of the virtual character to the second region.

The foregoing content describes that full synchronization is used as a condition for state switching. Considering that after the state switching, the first character data in the first region needs to be synchronously updated along with the second character data in the second region, and if the first character data has not been completely synchronized to the second region, it may lead to an obstacle in subsequent data update synchronization. Therefore, switching a data state under the condition of full synchronization can ensure consistent representation of the virtual character in different regions, avoid the problem of game stuttering or disorder caused by data asynchronization, ensure immersion of the player, ensure that no problem such as data loss or incorrect loading may occur during data synchronization, and dynamically control timing of data synchronization to avoid excessive consumption of system resources or performance degradation. Stability of interaction capabilities between different regions may also be ensured by using complete character data.

In this embodiment, creation priorities of virtual objects are determined according to visibility of the virtual objects, and object data of visible virtual objects is created in the second region by using a single frame duration according to the creation priorities, and when creation of the object data of the visible virtual objects is completed, object data of invisible virtual objects is created in the second region by using at least one frame duration, which can reduce a data synchronization volume required per frame during the Ghost creation, ensure that the player in the second region can see the virtual objects in time, and also ensure that a duration of data synchronization within each frame is less than the single frame duration, thereby avoiding problems such as frame stuttering during the Ghost creation. When Real-Ghost migration is triggered, by checking a creation status of the second character data of the virtual character, the first character data may be switched to the second state and the second character data may be switched to the first state when creation of the second character data is fully completed, to reduce a data synchronization volume during the Real-Ghost migration while ensuring that creation of the second character data is completed. In addition, Ghost creation is performed by using the backward frame-splitting mechanism. If the virtual character returns to the first region and leaves a line-of-sight range of the second region before the Ghost creation is completed, a creation task of object data that has not yet been created may be deleted, and no further creation is needed, which can further reduce consumption of data synchronization.

As the virtual character moves, a complete process of the Real-Ghost mechanism includes Ghost creation, Real-Ghost migration, and Ghost deletion.

In some embodiments, when the virtual character moves to a third position in the second region, the virtual character in the second region leaves a field of view of a player in the first region. Therefore, the first character data of the virtual character in the first region needs to be deleted.

In some embodiments, the third position is a boundary position in the second region for determining whether to perform Ghost deletion. In some embodiments, the third position may alternatively be referred to as a Ghost deletion line, and the third position may be a straight line, a curved line, or an irregular boundary line, which is not limited. In some embodiments, the third position may be determined by the server according to a field of view within which a virtual object in the second region can appear in the first region. During the movement of the virtual character from the second position in the second region to the third position in the second region, since the Real-Ghost migration process has occurred, the first character data of the virtual character maintained in the first region is full object data in the second state (Ghost state), and the second character data of the virtual character maintained in the second region is full object data in the first state (Real state). When the virtual character moves to the third position in the second region, since the virtual character in the second region leaves the field of view of the player in the first region, the first character data of the virtual character maintained in the first region is deleted, leaving only the second character data of the virtual character maintained in the second region, and the second character data remains the full object data in the first state (Real state). After Ghost deletion is performed, the player in the first region cannot see the virtual character in the second region.

In the Ghost deletion process, the first character data that needs to be deleted is the full object data of the virtual character. A plurality of virtual objects forming a virtual character and components attached to the virtual objects all need to execute gameplay-related exit logic and destructor functions. Therefore, the Ghost deletion process is similar to the Ghost creation process, also taking a relatively long time. Generally, it takes nearly 1 ms to delete a virtual object, and it takes about 40 to 100 ms to delete a virtual character. Therefore, to avoid that a duration in which the first character data needs to be deleted within a single frame exceeds the single frame duration, the first character data of the virtual character in the first region may be deleted within at least two frames, following the backward frame-splitting mechanism used in the Ghost creation process.

In some embodiments, deletion priorities of the object data of the at least two virtual objects may be determined, and the first character data of the virtual character in the first region is deleted according to the deletion priorities by using at least two frame durations.

The deletion priorities are configured for representing priorities for deleting the object data in the first character data. Illustratively, if the deletion priority of the object data is higher, the object data is deleted earlier, and if the deletion priority of the object data is lower, the object data is deleted later.

In some embodiments, the creation priorities may be directly used as the deletion priorities. That is, a virtual object preferentially created in the Ghost creation process is also preferentially deleted in the Ghost deletion process.

In some embodiments, the deletion priorities may be determined according to visibility of the virtual objects. The deletion priority of the object data of a visible virtual object is higher than that of object data of an invisible virtual object. For example, a deletion priority of a character object and visible equipment worn by the character object is higher, while a deletion priority of invisible equipment in a backpack is lower.

In some embodiments, the object data of the visible virtual object in the first region is deleted according to the deletion priorities by using a single frame duration; and the object data of the invisible virtual object in the first region is deleted by using at least one frame duration when deletion of the object data of the visible virtual object is completed. For example, the object data of the character object and the visible equipment worn by the character object in the first region are first deleted by using the single frame duration, and then the object data of the invisible equipment in the backpack in the first region is deleted within at least one following frame, thereby deleting the first character data in the first region.

In some embodiments, when the virtual character moves to the third position in the second region, the first character data of the virtual character in the first region is deleted according to the deletion priorities by using at least two frame durations.

Illustratively, the position of the virtual character is used as a condition for deleting the character data. If the virtual character moves within the second region to the third position that triggers the deletion of the character data, a process of deleting the object data step by step is implemented according to the deletion priorities of the object data respectively corresponding to the at least two virtual objects in the first character data, thereby implement a process of deleting the first character data. By deleting the object data of the virtual object step by step, the problem of untimely allocation of system resources caused by excessively fast data deletion is avoided. The first character data in the first region, which is already in the second state, is deleted in time, which also avoids data occupation of the first character data in the first region, reducing unnecessary frame stuttering and improving smoothness and stability of gaming experience.

FIG. 14 is a schematic diagram of deleting first character data in a first region according to deletion priorities according to some embodiments of this application.

As shown in FIG. 14, visible character objects and visible equipment are shown in black, and invisible equipment is shown in white. When the virtual character moves to the third position in the second region, the second region initiates a first-frame deletion task to the first region, the first region executes the first-frame deletion task, deleting object data of the visible character objects and the visible equipment in the first region within the duration of the first frame. The second region records a frame-splitting deletion task and initiates frame-splitting deletion to the first region, so that the first region deletes object data of the invisible equipment within at least one frame duration.

In this embodiment, the deletion priorities are determined according to visibility of the virtual objects, and according to the deletion priorities, the object data of the visible virtual object is first deleted from the first character data by using a single frame duration and then the object data of the invisible virtual object is deleted from the first character data by using at least one frame duration, which can ensure that the virtual character in the second region leaves a line-of-sight range of the first region in time, can avoid problems such as frame stuttering caused by that a duration in which the first character data needs to be deleted exceeds the single frame duration, and can also avoid the problem of excessive processing pressure on the server caused by deletion of an excessively large data volume within the single frame.

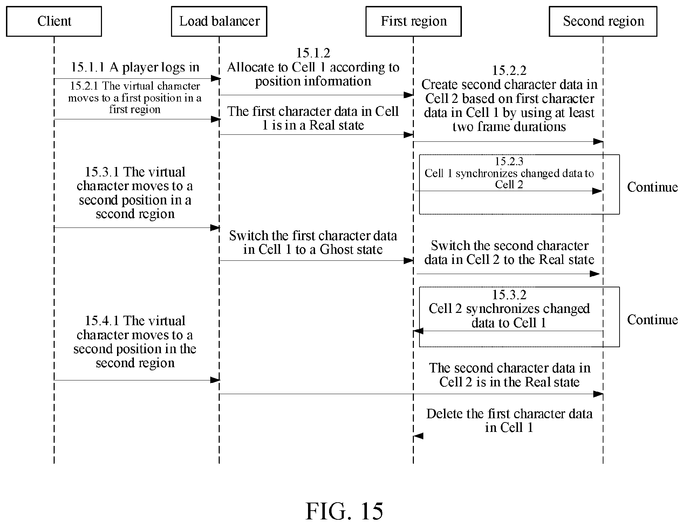

FIG. 15 is a timing diagram of Ghost creation, Real-Ghost migration, and Ghost deletion processes according to some embodiments of this application.

In FIG. 15, Ghost creation, Real-Ghost migration, and Ghost deletion processes are described by using an example in which a virtual object moves from a first region (Cell 1) to a second region (Cell 2) and sequentially moves to a first position (a Ghost creation line), a second position (a Real-Ghost migration line), and a third position (a Ghost deletion line). The timing diagram includes the following operations.

Operation 15.1.1: A player logs in to a game application by using a client.

Operation 15.1.2: Load balancing allocates, according to position information of a virtual character controlled by the player, the virtual character to Cell 1, Cell 1 maintains first character data of the virtual character, and the first character data is in a Real state.

Operation 15.2.1: The virtual character moves to a first position (the Ghost creating line) in a first region when moving from Cell 1 to Cell 2. Therefore, the virtual character appears in a line-of-sight range of Cell 2. The first character data of the virtual character maintained in Cell 1 remains in the Real state.

Operation 15.2.2: Second character data is created in Cell 2 based on the first character data of the virtual character maintained in Cell 1 by using at least two frame durations, both the first character data and the second character data are full object data of the virtual character, and the second character data maintained in Cell 2 is in a Ghost state.

Operation 15.2.3: When the first character data maintained in Cell 1 is changed, Cell 1 synchronizes changed data to Cell 2, so that Cell 2 synchronously updates the second character data based on the changed data, thereby ensuring consistency between the first character data and the second character data. This operation may continue during movement of the virtual character from the first position to a second position.

Operation 15.3.1: When the virtual character moves to a second position (the Real-Ghost migration line) in a second region, the first character data of the virtual character maintained in Cell 1 is switched from the Real state to the Ghost state, and the second character data of the virtual character maintained in Cell 2 is switched from the Ghost state to the Real state.

Operation 15.3.2: When the second character data maintained in Cell 2 is changed, Cell 2 synchronizes changed data to Cell 1, so that Cell 1 synchronously updates the first character data based on the changed data, thereby ensuring consistency between the first character data and the second character data. This operation may continue during movement of the virtual character from the second position to a third position.

Operation 15.4.1: When the virtual character moves to a third position (the Real-Ghost deletion line) in the second region, the second character data of the virtual character maintained in Cell 2 remains in the Real state, and the first character data of the virtual character maintained in Cell 1 is deleted.

Since the virtual character includes at least two associated virtual regions, a DS corresponding to a region may maintain, according to an attach relationship between virtual objects forming a virtual character, object data of the virtual character.

In some embodiments, the DS corresponding to the region may reflect an attach relationship between the virtual objects by using a tree structure, to maintain the object data of the virtual character. A virtual object that depends on another virtual object may be represented by a child node in the tree structure, and a virtual object that is depended upon by another virtual object may be represented by a parent node in the tree structure.

By way of example only, a secondary virtual object (equipment A) depends on a primary virtual object (a character object), and in the tree structure maintained by the DS, the equipment A is a child node of the character object, and the character object is a parent node of the equipment A. In some embodiments, equipment B (shoe boots) depends on a prop object C (a treasure box), the equipment B is a child node of the prop object C, and the prop object C is a parent node of the equipment B.

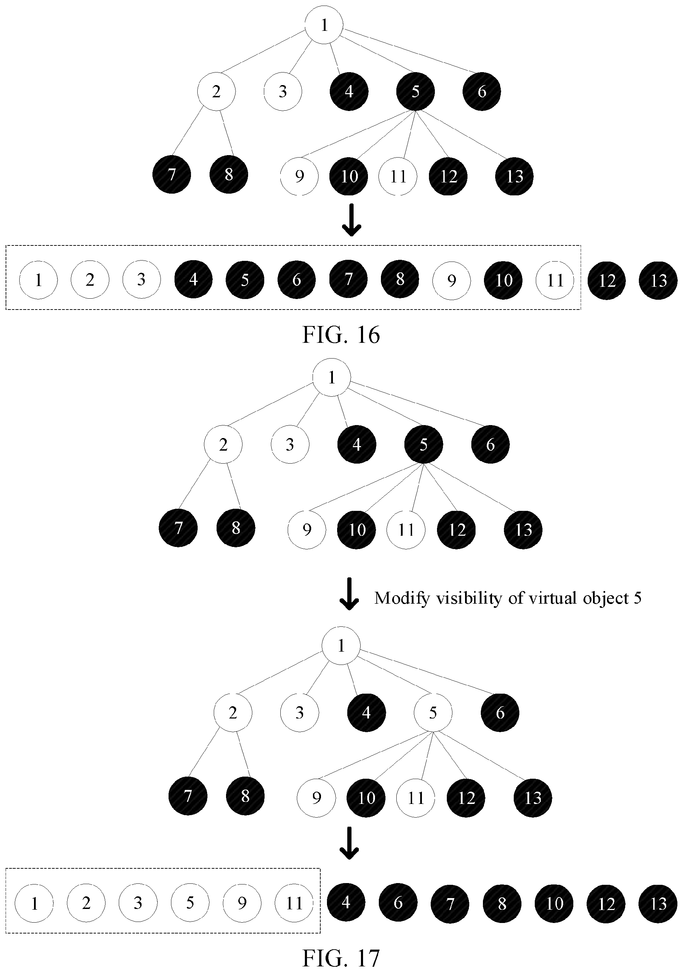

When creation priorities of the virtual objects are determined according to visibility of the virtual objects, the creation priorities of the virtual objects may further be determined with reference to the attach relationship between the virtual objects. FIG. 16 is a schematic diagram of determining creation priorities of respective virtual objects with reference to an attach relationship between the virtual objects according to some embodiments of this application.

In the tree structure in FIG. 16, circles with labels represent virtual objects forming a virtual character, where white circles represent visible virtual objects, and black circles represent invisible virtual objects. Virtual objects represented by parent and child nodes have an attach relationship, and the child node depends on the parent node.

Exemplarily, a virtual object 1 (a white circle with a label 1) is a visible primary virtual object (a game character), and a virtual object 4 (a black circle with a label 4) is an invisible secondary virtual object (equipment A). A virtual object 5 (a black circle with a label 5) is an invisible virtual object (a treasure box), and a virtual object 9 (a white circle with a label 9) is equipment B visible in the treasure box.

Regarding a manner of determining creation priorities of respective virtual objects with reference to an attach relationship between the virtual objects, in some embodiments, an attach relationship tree of the at least two virtual objects is traversed according to an attach relationship between the at least two virtual objects to obtain a level-order traversal sequence, wherein the attach relationship tree represents attach relationships of the virtual objects. For example, level-order traversal may be performed on the at least two virtual objects according to an attach relationship between the at least two virtual objects, to obtain a level-order traversal sequence. For example, in FIG. 16, a tree structure is formed according to an attach relationship between virtual objects, and level-order traversal is performed on the virtual objects in the tree structure, to obtain a level-order traversal sequence: virtual objects 1, 2, 3, 4, 5, 6, 7, 8, 9, 10, 11, 12, 13.

In some embodiments, a sub-sequence that is in the level-order traversal sequence, includes all visible virtual objects, and has a shortest sequence length may be determined as a first sub-sequence.

For example, in FIG. 16, the first sub-sequence is: virtual objects 1, 2, 3, 4, 5, 6, 7, 8, 9, 10, 11. The first sub-sequence includes all visible virtual objects (shown as white circles) and has the shortest sequence length.

In some embodiments, a sequence formed by virtual objects outside the first sub-sequence may be determined as a second sub-sequence.

For example, in FIG. 16, the second sub-sequence is: virtual objects 12, 13.

In some embodiments, a creation priority of the virtual objects in the first sub-sequence may be determined as a first priority; and a creation priority of the virtual objects in the second sub-sequence may be determined as a second priority, where the first priority is higher than the second priority.

Therefore, when Ghost creation is performed by using at least two frame durations, object data of the virtual objects 1 to 11 may be created in the second region based on object data of the virtual objects 1 to 11 in the first sub-sequence within one frame duration according to the first priority.

Since the first sub-sequence includes all visible virtual objects, a player viewing the second region can see complete visible virtual objects on the virtual character while seeing the virtual character in time, thereby improving completeness of character viewing and interactive experience of the player. Since a sequence length of the first sub-sequence is the shortest among sub-sequences including all visible virtual objects, data created within the frame achieves a relatively high degree of completeness with a minimum data synchronization volume, which can effectively avoid problems such as frame stuttering possibly caused by that a data synchronization duration of the frame exceeds the frame duration. If object data of virtual objects in the first sub-sequence is created in the second region, object data respectively corresponding to the remaining invisible virtual objects in the second sub-sequence is created in the second region by using at least one frame, which can further improve integrity of picture display when the player views the second region and performs a subsequent operation while ensuring a small data synchronization volume of each of the at least one frame. Even if the player views an invisible virtual object, efficient display can also be achieved, thereby improving human-computer interaction efficiency while distributing a data processing volume.

However, in the foregoing manner, even if the first sub-sequence is the shortest sub-sequence including all the visible virtual objects, the first sub-sequence includes a larger quantity of virtual objects. Therefore, to further reduce the quantity of virtual objects in the first sub-sequence to reduce a data synchronization volume of the first frame in the Ghost creation process, a manner of modifying visibility of the virtual objects may also be adopted.

FIG. 17 is a schematic diagram of determining creation priorities by modifying visibility of virtual objects according to some embodiments of this application. In the tree structure in FIG. 17, circles with labels represent virtual objects forming a virtual character, where white circles represent visible virtual objects, and black circles represent invisible virtual objects. Virtual objects represented by parent and child nodes have an attach relationship, and the child node depends on the parent node.

Exemplarily, the virtual object 5 is an invisible virtual object (a treasure box), the virtual objects 9 and 11 are visible equipment in the treasure box, and the virtual objects 10, 12, and 13 are invisible equipment in the treasure box.

In some embodiments, for a visible virtual object among the virtual objects, a virtual object on which the visible virtual object depends may be modified to a visible state based on an attach relationship between the virtual objects.

For example, in FIG. 17, virtual objects 9 and 11 are visible virtual objects, and the virtual object 5 on which the virtual objects depend is an invisible virtual object. Therefore, the virtual object 5 is modified from an invisible state to a visible state, making the virtual object 5 a visible virtual object (shown as a white circle).

After the modification to the visible state, a creation priority of the visible virtual objects among the virtual objects may be determined as the first priority; and a creation priority of the invisible virtual objects among the virtual objects may be determined as the second priority, where the first priority is higher than the second priority. For example, in FIG. 17, the creation priority of the visible virtual objects 1, 2, 3, 5, 9, and 11 is determined as the first priority, and the creation priority of the invisible virtual objects 4, 6, 7, 8, 10, 12, and 13 is determined as the second priority.

Therefore, when Ghost creation is performed, according to the first priority, first, object data of the visible virtual objects 1, 2, 3, 5, 9, and 11 is synchronized to the second region by using the first frame, and after object data of the visible virtual objects 1, 2, 3, 5, 9, and 11 is created in the second region, object data of the invisible virtual objects 4, 6, 7, 8, 10, 12, and 13 is synchronized to the second region by using at least one frame, thereby completing creation of the second character data.

It can be seen by comparing FIG. 16 with FIG. 17 that after the virtual objects on which the visible virtual objects depend are modified to the visible state, an amount of data of the virtual objects needing to be synchronized in the first frame is reduced (object data of 11 virtual objects needs to be synchronized in the first frame in FIG. 16, while object data corresponding to only 6 virtual objects needs to be synchronized in the first frame in FIG. 17). Therefore, by modifying the visibility of the virtual objects, the data synchronization volume in the first frame in the Ghost creation process can be further reduced.

The foregoing content describes content of modifying, based on an attach relationship, a virtual object on which a visible virtual object depends to a visible state. When the visible virtual object has a high creation priority, considering that the virtual object on which the visible virtual object depends generally also needs to be displayed, even if the virtual object on which the visible virtual object depends is not in a visible state, the virtual object is granted the first priority, which is higher, by modification to the visible state, thereby ensuring that the visible virtual object and the virtual object on which the visible virtual object depends are preferentially loaded during user interaction and visual presentation, avoiding rendering delay and frame stuttering phenomena of the virtual object, improving picture smoothness, and providing the user with more immersive interactive experience.

For a purpose of reducing a data synchronization volume in the first frame in the Ghost creation process, the virtual object 5 is modified from an invisible state to a visible state. In some embodiments, to display a true invisible state of the virtual character in the second region, after object data corresponding to the virtual object 5 is synchronized to the second region, the virtual object 5 may further be restored from the visible state to the invisible state according to a visibility modification flag carried during data synchronization. The visibility modification flag is configured for representing that visibility modification is performed on the virtual object 5.

In at least two frame durations of Ghost creation, the user may perform any possible operation on the virtual character. In a possible scenario, the user performs visibility modification on virtual objects forming a virtual character. For example, the user may equip invisible equipment A in the backpack onto the virtual character, thereby modifying the equipment A from the invisible equipment into visible equipment. In this case, object data of the equipment A needs to be preferentially synchronized, so that the player in the second region can see in time that the virtual character wears the equipment A.

In some embodiments, when the first virtual object is switched from the invisible state to the visible state, a creation priority of object data of the first virtual object is improved. For example, the first virtual object is invisible equipment in the backpack. Before the user performs an operation on the first virtual object, a creation priority of the first virtual object is a second priority. Therefore, the object data of the first virtual object is synchronized to the second region within a duration of at least one frame after the first frame. However, after the user equips the virtual character with the first virtual object, the creation priority of the first virtual object is improved from the second priority to the first priority.

In some embodiments, the object data of the first virtual object is created in the second region based on the object data of the first virtual object in the first character data according to the improved creation priority of the object data of the first virtual object. For example, after the creation priority of the first virtual object is improved from the second priority to the first priority, the object data of the first virtual object is synchronized to the second region in a current frame, so that the player in the second region can see, in time, the first virtual object worn by the virtual character.

In this embodiment, when the first virtual object is switched from the invisible state to the visible state, the creation priority of the object data of the first virtual object is improved, and the object data of the first virtual object is created in the second region according to the improved creation priority, so that the player in the second region can see, in time, the first virtual object switched to the visible state, which improves rendering efficiency and interactive experience of the first virtual object, reduces an object loading delay, enhances game smoothness and immersion, optimizes allocation and utilization of data loading resources, avoids unnecessary frame stuttering, makes the player unaware of the data synchronization process, and improves user experience.

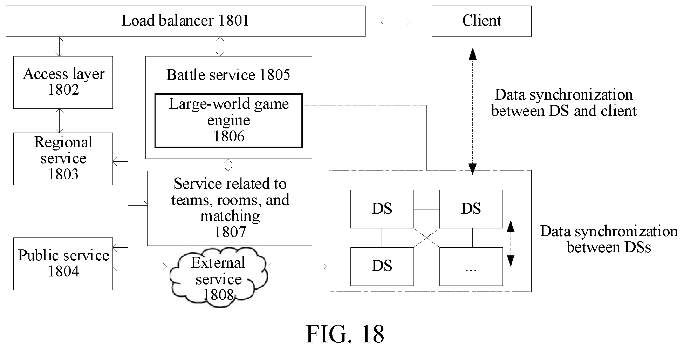

The server may manage the game world by using various services included. FIG. 18 is a system architectural diagram of a server according to some embodiments of this application.

The server is a backend server of a game application. The server may be an independent physical server, or may be a server cluster or a distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

The server may include a load balancer 1801 configured to perform load distribution, to allocate traffic of a client. An access layer 1802 is configured to access the traffic of the client to a regional service 1803, and the regional service 1803 is configured to implement services related to content such as characters, emails, and activities in the game application. The regional service 1803 and a public service 1804 may be configured for implementing a service 1807 related to teams, rooms, and matching in the game application. The public service 1804 interacts with an external service 1808 to implement functions of other external services.

The server further includes a battle service 1805 configured for a game battle. The battle service 1805 includes a large-world game engine 1806. The large-world game engine 1806 provides DSs configured to manage various regions. Each region corresponds to a DS. Object data of a virtual character maintained in the DS may be synchronized to the client by using the DS corresponding to the region, to implement the first type of data synchronization (synchronization between the DS and the client). In some embodiments, by using the DS corresponding to one region, object data of a virtual character maintained in the region may be synchronized to the DS corresponding to another region, to implement the second type data synchronization (data synchronization between DSs).

The foregoing embodiments only describe a general architecture of the server, and the system may further include more or fewer components, or some components may be combined, which is not limited in this embodiment.

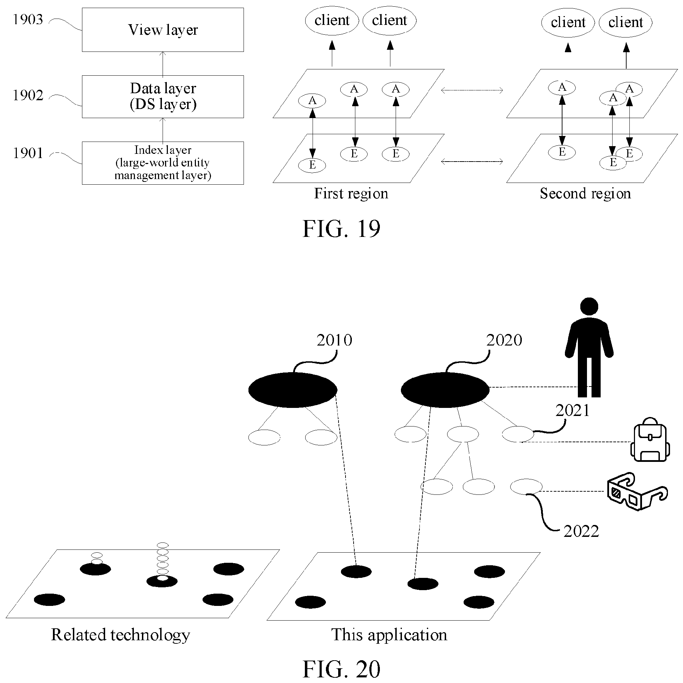

FIG. 19 is a system architectural diagram of a data flow of a large-world game engine according to some embodiments of this application.

As shown in FIG. 19, a data flow of the large-world game engine is divided into an index layer, a data layer, and a view layer. The index layer 1901 is also referred to as a large-world entity management layer, and is configured to manage entities in the regions. The data layer 1902 is also referred to as a DS layer, and is configured to manage virtual objects (actors) in the regions. The view layer 1903 is also referred to as a presentation layer, and is configured to manage view content of a client.

The actors (shown as A in FIG. 19) in each region are managed by the DS layer corresponding to the region, the entities (shown as E in FIG. 19) in each region are managed by the large-world entity management layer corresponding to the region, and the entities managed by the large-world entity management layer are in one-to-one correspondence with the actors managed by the DS layer. The DS layer and the large-world entity management layer may be configured to manage different attributes of virtual objects. For example, the DS layer may manage positions, object types (e.g., a primary virtual object or a secondary virtual object), postures, levels, and the like of the virtual objects. The large-world entity management layer may manage attributes such as positions and visibility of the virtual objects.

The DS layer also manages logical information at a game logic level. The logical information at the game level includes association relationship information between the virtual objects (such as attach relationship information indicating that a secondary virtual object depends on a primary virtual object, or attach relationship information indicating that different secondary virtual objects depend on the same primary virtual object, or loading relationship information or control relationship information between virtual objects), and sharing relationship information between virtual characters (e.g., information related to an information sharing relationship between a virtual character A and a virtual character B belonging to the same team), or visibility information of a virtual object for different virtual characters (e.g., information such as equipment worn by a certain virtual character being visible only to the client controlling the virtual character).

The large-world entity management layer does not have logical information at the game logic level. However, in some embodiments of this application, the logical information at the game logic level included in the DS layer may be transparently transmitted to the large-world entity management layer, so that the large-world entity management layer can update the entities based on the logical information. Since the large-world entity management layer does not have logical information at the game logic level, the large-world entity management layer needs to compute update statuses of all entities in each frame. Therefore, a quantity of calculations required per second by the large-world entity management layer for the entire game world may be expressed by using the following formula: 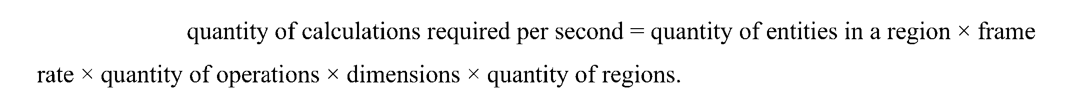 quantity of calculations required per second = quantity of entities in a region × frame rate × quantity of operations × dimensions × quantity of regions.

Dimensionality in a planar map is 2, and two dimensions, x and y, need to be calculated. The quantity of operations is 3, including three operations: Ghost creation, Real-Ghost migration, and Ghost deletion. Therefore, in an example in which the quantity of entities in a single region is 1000, the quantity of regions is 10, and the frame rate is 30, the quantity of calculations required per second by the large-world entity management layer is 1.8 million.

To reduce the quantity of calculations required per second by the large-world entity management layer, in some embodiments of this application, the logical information at the game logic level in the DS is transparently transmitted to the large-world entity management layer. Therefore, the large-world entity management layer may calculate update statuses of the entities according to association information between the virtual objects.

FIG. 20 is a schematic diagram of comparing a quantity of calculations of a large-world entity management layer between a related technology and this application according to another exemplary embodiment of this application.

In FIG. 20, a black circle represents a primary entity corresponding to a primary virtual object in a virtual character, and a white circle represents a secondary entity corresponding to a secondary virtual object in the virtual character. The primary entity is an entity corresponding to the primary virtual object, and the secondary entity is an entity corresponding to the secondary virtual object.

As shown in FIG. 20, in a related technology, the entities in the large-world entity management layer do not include an association relationship between the virtual objects. Therefore, a position update status of an entity needs to be calculated for each virtual object once per second (that is, in the related technology, a position update status of an entity needs to be calculated for 5 primary virtual objects and 8 secondary virtual objects shown in FIG. 20).

However, in some embodiments of this application, since the entities include the association relationships among virtual objects, only position update statues of primary entities of the 5 primary virtual objects need to be calculated, while position update statuses of entities of the secondary virtual objects may be determined based on the position update statuses of the primary entities of the primary virtual objects on which the secondary virtual objects depend, without the need for separate calculation. Therefore, the quantity of calculations required per second by the large-world entity management layer can be greatly reduced.

For example, in FIG. 20, for 2 secondary virtual objects that depend on a primary virtual object 2010, and position update statuses of corresponding entities are determined based on a position update status of an entity of the primary virtual object 2010, without the need for separate calculation. For 6 secondary virtual objects that depend on the primary virtual object 2020, position update statuses of corresponding entities are determined based on the position update status of the entity of the primary virtual object 2020, without the need for separate calculation.

There is a loading relationship between the secondary virtual object 2021 and the secondary virtual object 2022 that depend on the primary virtual object 2020. For example, the primary virtual object 2020 is a character object, the secondary virtual object 2021 is a backpack object, the secondary virtual object 2022 is a glasses object, and the glasses object is loaded in the backpack object.

In some embodiments, when a movement instruction for a virtual character is received, position information of a primary entity corresponding to a primary virtual object in the virtual character is updated in the large-world entity management layer.

The virtual character includes a primary virtual object and at least one secondary virtual object, and the secondary virtual object depends on the primary virtual object. The large-world entity management layer is configured to manage entities respectively corresponding to the at least two virtual objects.

In some embodiments, when a user performs a move operation on the virtual character A, a movement instruction is transmitted to the server, and the large-world entity management layer updates, based on the movement instruction, position information of a primary entity corresponding to a primary virtual object (character object) forming the virtual character A.

In some embodiments, position information of secondary entities corresponding to secondary virtual objects in the large-world entity management layer is updated according to the position information of the primary entity corresponding to the primary virtual object.

For example, the large-world entity management layer first determines all secondary virtual objects that depend on the primary virtual object, and modifies position information of secondary entities corresponding to all the secondary virtual objects to position information of an entity corresponding to the primary virtual object.

In this embodiment, since the large-world entity management layer includes an association relationship between virtual objects, when position information of entities of virtual objects is updated and calculated, a position update status of a primary entity corresponding to a primary virtual object is calculated instead of calculating a position update status of an entity corresponding to each virtual object, and a position update status of a secondary entity of a secondary virtual object may be determined based on an attach relationship between the secondary virtual object and the primary virtual object. Therefore, by using the method in this embodiment, a quantity of calculations of position update statuses of entities by the large-world entity management layer can be greatly reduced, thereby reducing consumption of computing resources.

In addition to virtual characters that support movement (including a primary virtual object and a secondary virtual object forming the virtual character), a virtual environment may further include a large quantity of virtual objects that do not support movement, for example, virtual objects corresponding to doors, windows, walls, or equipment and props discarded by the virtual character. Therefore, to reduce the quantity of calculations performed by the large-world entity management layer, an immovable flag may further be set for a virtual object that does not support movement. Therefore, the large-world entity management layer may not calculate an update status of an entity corresponding to the virtual object having the immovable flag.

In some embodiments, a movable virtual object and an immovable virtual object in the virtual environment may be determined.

In some embodiments, a virtual object is determined to be a movable virtual object or an immovable virtual object according to an object type of the virtual object in the virtual environment. For example, a primary virtual object and a secondary virtual object forming a virtual character are movable objects. Scenery objects (such as a door, a window, and a wall) in the virtual environment are immovable objects.

In some embodiments, a virtual object is determined to be a movable object or an immovable object according to an object state of the virtual object. For example, a vehicle in a traveling state is a movable object, while a vehicle not in a traveling state is an immovable object.

In some embodiments, an immovable flag may be added to the immovable object to indicate that the immovable object is immovable.

In some embodiments, when a movement instruction for the movable virtual object is received, position information of an entity corresponding to the movable virtual object is updated in the large-world entity management layer. The large-world entity management layer is configured to manage entities respectively corresponding to at least two virtual objects.

For example, the large-world entity management layer calculates an update status only for an entity of a movable virtual object that does not include an immovable flag, and updates position information of the entity corresponding to the movable virtual object in the large-world entity management layer.

When a movement instruction for the immovable virtual object is received, updating an entity corresponding to the immovable virtual object is skipped in the large-world entity management layer.

For example, the large-world entity management layer may not calculate an update status for an entity of an immovable virtual object that includes an immovable flag, and may keep position information of the immovable virtual object in the current frame consistent with position information of the immovable virtual object in a previous frame.

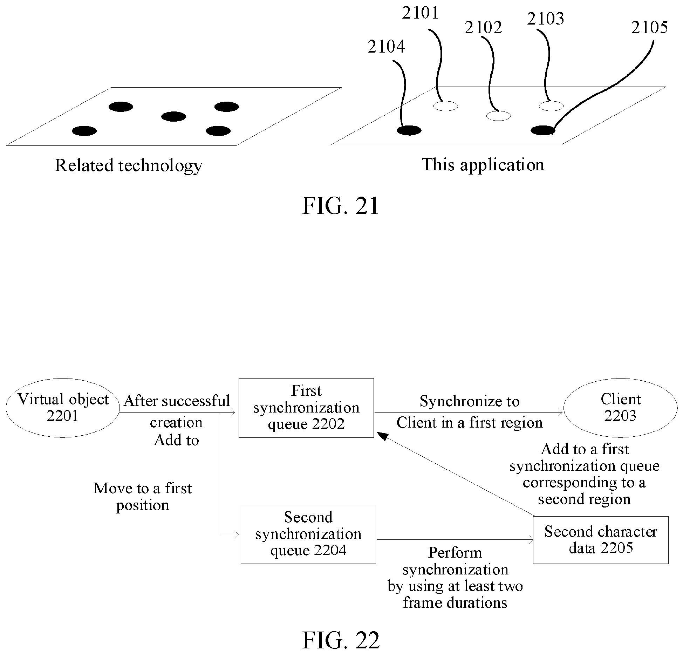

FIG. 21 is a schematic diagram of comparing a quantity of calculations of a large-world entity management layer between a related technology and this application according to another exemplary embodiment of this application.

As shown in FIG. 21, in the related technology, an update status is calculated for each entity, and an entity of an immovable object is ineffectively calculated (for example, in the related technology shown in FIG. 21, update statuses of 5 entities need to be calculated, and therefore, the quantity of calculations is 5).

However, in some embodiments of this application, the update status of the entity of the immovable object is not calculated. As shown in FIG. 21, immovable objects represented by white circles include an immovable object 2101, an immovable object 2102, and an immovable object 2103, and movable objects represented by black circles include a movable object 2104 and a movable object 2105. Then, the server calculates only update statuses of entities of the movable object 2104 and the movable object 2105. Therefore, the quantity of calculations is 2.

In this embodiment, by determining the movable virtual object and the immovable virtual object, the large-world entity management layer may not calculate an update status for an entity of the immovable virtual object, and therefore, a quantity of calculations performed by the large-world entity management layer is reduced, thereby reducing consumption of computing resources.

In the related technology, various virtual objects in a virtual environment are managed by using a queue (as shown in FIG. 5). When there are a larger quantity of virtual objects, a quantity of traversals is larger and a position determination needs to be performed on each traversed virtual object (for example, position relationships between a virtual character formed by the virtual objects and the Ghost creation line, the Real-Ghost migration line, as well as the Ghost deletion line are separately determined), leading to relatively high computational overhead.

In some embodiments of this application, the virtual objects in the virtual environment are managed by using a first synchronization queue and a second synchronization queue, to reduce the computational overhead.

In some embodiments, before the second character data of the virtual character is created in the second region, when the virtual character is located in the first region, the virtual objects forming the virtual character are added to the first synchronization queue corresponding to the first region.

The object data of the virtual objects in the first synchronization queue is configured for synchronization to a client viewing the first region.

Illustratively, the client viewing the first region may also be referred to as a client corresponding to the first region; the client corresponding to the first region represents a client that views the virtual character in the first region; and the client corresponding to the first region represents a client that manages (e.g., controls) the virtual character in the first region.

For example, if virtual objects forming the virtual character A in the first region include virtual objects 1, 2, and 3, the virtual objects 1, 2, and 3 need to be added to the first synchronization queue.

In some embodiments, when the virtual character in the first region is successfully created, the virtual objects forming the virtual character are added to the first synchronization queue.

FIG. 22 is a schematic diagram of adding a virtual object to a first synchronization queue and a second synchronization queue according to some embodiments of this application. As shown in FIG. 22, a virtual object 2201, after being successfully created in the first region, is added to a first synchronization queue 2202. Object data of virtual objects included in the first synchronization queue 2202 is configured for synchronization to a client 2203 corresponding to the first region.

If object data of all the virtual objects included in the first synchronization queue 2202 is synchronized to the client in the first region, it may lead to excessive consumption of data synchronization between the DS and the client.

In some embodiments, not all object data of the virtual objects in the first synchronization queue 2202 needs to be synchronized to all clients in the first region. Instead, the object data of the virtual objects may be filtered according to some policies, to synchronize the object data of the virtual objects to clients corresponding to the first region that need to view the virtual objects.

Policies for filtering the object data of the virtual objects may include at least one of the following policies.
I. It is determined according to visibility of a virtual object to a client in the first region, whether to synchronize object data of the virtual object in the first synchronization queue to the client.

The visibility of the virtual object to the client in the first region further includes the following situations:
(1) If the virtual object is an object visible only to the player, only the client that controls the virtual object in the first region has visibility of the virtual object. Therefore, the object data of the virtual object needs to be synchronized only to the client, and not to other clients in the first region. For example, items in a backpack of a virtual character are viewable only by the player, so there is no need to synchronize object data of the items in the backpack to other clients.
(2) If the virtual object is visible to all clients in a team in which the player is in, the object data of the virtual object needs to be synchronized to all clients in a first region of the team, so that the clients in the first region of the team share information of the virtual object. For example, the items in the backpack of the virtual character are viewable only by all players in the team in which the player is in, so the object data of the items in the backpack needs to be synchronized to the clients corresponding to all the players in the team.
(3) If the virtual object is visible to all clients, the object data of the virtual object needs to be synchronized to each client in the first region. For example, if a primary virtual object forming the virtual character is visible to all clients in the first region, object data of the primary virtual object needs to be synchronized to all clients in the first region.
(4) If the virtual object is an NPC, it is determined, according to a requirement at a game logic level, whether the NPC is visible to a client corresponding to the first region, to determine whether the virtual object needs to be synchronized to the client corresponding to the first region.

II. It is determined according to an update status of the object data of the virtual object, whether to synchronize the object data of the virtual object in the first synchronization queue to the client.

The update status of the object data of the virtual object further includes the following situations: if the virtual object is an immovable object (such as a door, a window, or a wall), after the object data of the virtual object is synchronized to the client, the object data of the immovable object does not need to be synchronized to the client in the first region in subsequent frames. If the virtual object is an inactive object (e.g., a virtual object that does not change over a long period of time), after the object data of the virtual object is synchronized to the client, and the object data of the inactive object does not need to be synchronized to the client in the first region in subsequent frames. If the object data of the virtual object in the current frame is consistent with object data in a previous frame, that is, the object data of the virtual object remains unchanged, the object data of the virtual object does not need to be synchronized to the client in the current frame.

III. It is determined according to a distance between the virtual object and a virtual character controlled by the client corresponding to the first region, whether to synchronize object data of the virtual object in the first synchronization queue to the client.

For example, when the distance between the virtual object and the virtual character controlled by the client exceeds a distance threshold, the virtual object does not fall within a line-of-sight range of the virtual character controlled by the client. Therefore, the object data of the virtual object is not synchronized to the client.

In some embodiments, whether to synchronize the object data of the virtual object in the first synchronization queue to the client is determined by using an AOI algorithm. By using the foregoing policies, the object data of the virtual object may be synchronized only to a client corresponding to the first region and needing to view the virtual object, thereby reducing performance consumption of data synchronization between the DS and the client.

In some embodiments, if a virtual character corresponding to a virtual object in the first synchronization queue moves to a first position in the first region, the virtual object is added to the second synchronization queue corresponding to the first region.

The object data of the virtual object in the second synchronization queue is configured for synchronization to the second region.

For example, when the virtual object 2201 in the first synchronization queue moves to the first position (the Ghost creation line) in the first region, the virtual object 2201 is added to a second synchronization queue 2204.

In some embodiments, for virtual objects synchronized to different regions, the same or different second synchronization queues may be used. For example, a second synchronization queue for data synchronization from the DS corresponding to the first region to the DS corresponding to the second region and a second synchronization queue for data synchronization from the DS corresponding to the first region to the DS corresponding to the third region may be the same or different queues.

In some embodiments, second character data 2205 of a virtual character formed by virtual objects may be created in the second region based on object data of the virtual objects in the second synchronization queue 2204 by using at least two frame durations.

For example, the virtual objects in the second synchronization queue may be traversed, and based on object data of a traversed virtual object, object data of a virtual character formed by the virtual object is created in the second region by using at least two frame durations.

After second character data of the virtual character formed by the virtual object is maintained in the second region, the virtual object further needs to be added to the first synchronization queue corresponding to the second region, to synchronize the object data of the virtual object to the client corresponding to the first region. The first synchronization queue corresponding to the second region may further include the object data of the virtual object in a Ghost state.

Since the virtual objects in the second synchronization queue are added from the first synchronization queue, a quantity of virtual objects in the second synchronization queue is less than a quantity of virtual objects in the first synchronization queue. That is, when the virtual objects in the second synchronization queue are traversed, a quantity of traversals is less than a quantity of virtual objects included in the first region. Therefore, by providing the first synchronization queue and the second synchronization queue, the quantity of traversals of the second synchronization queue may be reduced, thereby avoiding the problems of excessive traversals and high performance consumption required for data synchronization between the DSs. In addition, the second character data is created by using at least two frame durations, so that a smooth transition of data can be implemented, thereby reducing a communication delay between the client and the server, optimizing efficiency of data transmission, reducing occurrences of frame stuttering, effectively improving stability of game operation, and providing the player with smoother and more immersive gaming experience.

When the first character data is changed, the virtual objects in the second synchronization queue may also be traversed, to determine whether changed data of a traversed virtual object needs to be synchronized to the second region.

To reduce a quantity of traversals of the second synchronization queue during synchronization of the changed data, in some embodiments, a sleep flag may be added to the virtual object. The sleep flag is configured for indicate that the object data of the virtual object is not changed within a preset duration.

In some embodiments, the preset duration is a duration of a historical time period before the current frame, or may be a duration of a future time period after the current frame. For example, when object data of a virtual object has not been changed within the past 10 minutes, a sleep flag may be added to the virtual object, or when the user performs a freezing operation so that the virtual object remains unchanged within 5 minutes in the future, a sleep flag may be added to the virtual object.

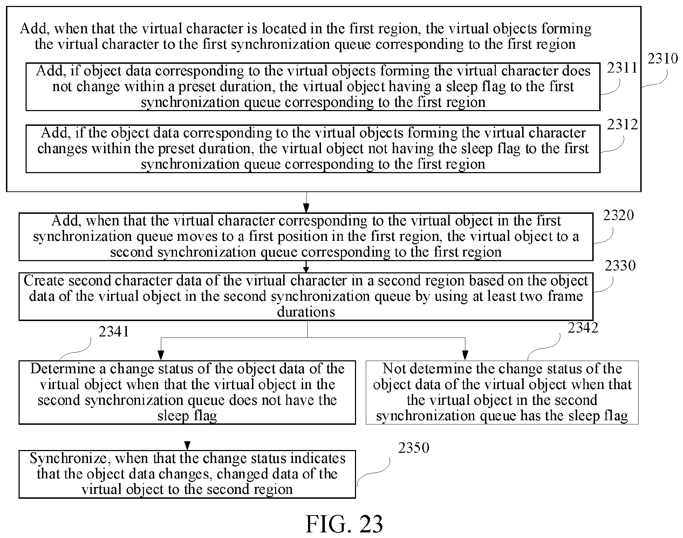

FIG. 23 is a flowchart of adding a sleep flag to virtual objects to reduce a quantity of traversals of the virtual objects in a second synchronization queue according to some embodiments of this application. The process includes the following operations.

Operation 2310: Add, when the virtual character is located in the first region, the virtual objects forming the virtual character to the first synchronization queue corresponding to the first region.

The object data of the virtual objects in the first synchronization queue is configured for synchronization to a client viewing the first region.

Illustratively, if a client 1 views the first region, a client 2 views the second region, and a client 3 views the first region and the second region, the object data of the virtual objects in the first synchronization queue may be synchronized to the client 1 and the client 3 that view the first region.

In some embodiments, the server may directly add the virtual objects forming the virtual character to the first synchronization queue corresponding to the first region. In some other embodiments, the server may further add a specific flag to a virtual object, and add the specific flag to the first synchronization queue together with the virtual object, so that the first synchronization queue includes more specific information of the virtual object. In some embodiments, the server may add a visibility flag to the virtual object to indicate whether the virtual object is visible to the client. In some embodiments, the server may add a team flag to the virtual object to indicate a team to which the virtual character corresponding to the virtual object belongs. In addition, the server may add various other types of flags to the virtual object and add the flags together with the virtual object into the first synchronization queue, so that the first synchronization queue includes more specific information of the virtual object, which is not limited in this application.

A virtual object of a virtual character is added to a first synchronization queue corresponding to a first region, and object data of the virtual object is transmitted to a client by using the synchronization queue, so that more efficient data transmission can be implemented in the first region in which the virtual character is located. Synchronization tasks are managed and scheduled effectively by using the synchronization queue, to ensure that the client can receive data of the virtual object according to a sequence and a priority, thereby avoiding a data conflict and loss and improving overall synchronization efficiency. Moreover, frequent and unordered data exchange between the client and the server can be avoided, thereby reducing bandwidth consumption and a network delay. In addition, the user using the client can also more smoothly see a change in a scene presented in the first region, thereby reducing delay and frame stuttering phenomena, improving immersion, facilitating interaction of the user with the virtual character and the virtual object, and enhancing manageability and scalability of data synchronization.

In some embodiments, the server may further add a sleep flag to the virtual object to indicate that the object data of the virtual object is not changed within a preset duration.

In some embodiments in which the sleep flag is added to the virtual object, operation 2310 may include sub-operation 2311 and sub-operation 2312.

Sub-operation 2311: Add, if object data corresponding to the virtual objects forming the virtual character is not changed within a preset duration, the virtual object having a sleep flag to the first synchronization queue corresponding to the first region.

For example, when the object data of the virtual object has not been changed within the past 10 minutes in history or will not be changed within 5 minutes in the future, the virtual object having the sleep flag is added to the first synchronization queue corresponding to the first region.

In some embodiments, the sleep flag may further include an estimated sleep duration. In some embodiments, the sleep duration may be controlled based on a freezing duration indicated by a freezing operation performed by the user on the virtual object.

Sub-operation 2312: Add, if the object data corresponding to the virtual objects forming the virtual character is changed within the preset duration, the virtual object not having the sleep flag to the first synchronization queue corresponding to the first region.

For example, the virtual objects forming the virtual character and not having the sleep flag are added to the first synchronization queue when a control operation on the virtual character has been received within the past 10 minutes.

Operation 2320: Add, when the virtual character corresponding to the virtual object in the first synchronization queue moves to a first position in the first region, the virtual object to a second synchronization queue corresponding to the first region.

The object data of the virtual object in the second synchronization queue is configured for synchronization to the second region. A virtual object having a sleep flag in the first synchronization queue also has the sleep flag in the second synchronization queue.

For example, when if a virtual object 1 in the first synchronization queue has a sleep flag, a virtual character corresponding to the virtual object 1 moves to the first position in the first region, the sleep flag is added together with the virtual object 1 to the second synchronization queue. As a result, in the obtained second synchronization queue, the virtual object 1 also has the sleep flag.

Operation 2330: Create second character data of the virtual character in a second region based on the object data of the virtual object in the second synchronization queue by using at least two frame durations.

For more content about operation 2330, refer to FIG. 10, FIG. 13, FIG. 15, FIG. 16, and FIG. 17 and related descriptions thereof. Details are not described herein again.

Operation 2341: Determine a change status of the object data of the virtual object when the virtual object in the second synchronization queue does not have a sleep flag.

The sleep flag is configured for representing that the object data of the virtual object is not changed within a preset duration.

In some embodiments, each virtual object in the second synchronization queue may be traversed, and a change status of object data of the virtual object is determined when the virtual object does not have a sleep flag.

A manner of determining the change status of the object data of the virtual object includes any one of the following manners.
(1) The change status of the object data of the virtual object is determined by comparing the object data of the virtual object in a current frame with the object data of the virtual object in a previous frame.

For example, when the object data of the virtual object in the current frame is inconsistent with the object data of the virtual object in the previous frame, the change status may be determined as Changed. When the object data of the virtual object in the current frame is consistent with the object data of the virtual object in the previous frame, the change status may be determined as Not Changed.

(2) The change status of the object data of the virtual object is determined by adding a data change flag to the virtual object.

In some embodiments, when the object data corresponding to the virtual objects forming the virtual character is changed, the virtual object having a data change flag is added to the first synchronization queue corresponding to the first region.

When the object data corresponding to the virtual objects forming the virtual character is not changed, the virtual object not having the data change flag is added to the first synchronization queue corresponding to the first region.

In some embodiments, whether the object data of the virtual object is changed may be determined by whether an operation instruction of the client for the virtual object is received or whether an operation instruction for updating the virtual object is included in the server. When at least one of the foregoing operation instructions exists, a data change flag may be added to the virtual object in the first synchronization queue.

If the virtual character corresponding to the virtual object in the first synchronization queue moves to the first position in the first region, the virtual object in the first synchronization queue is added to the second synchronization queue corresponding to the first region. The virtual object having a data change flag in the first synchronization queue also has the data change flag in the second synchronization queue.

For example, if the virtual object 1 (Actor 1) in the first synchronization queue has a data change flag, the data change flag is added together with the virtual object 1 to the second synchronization queue corresponding to the first region.

The change status of the object data of the virtual object is determined as Changed when the virtual object in the second synchronization queue has a data change flag. The change status of the object data of the virtual object is determined as Not Changed when the virtual object in the second synchronization queue does not have a data change flag.

When the virtual object in the second synchronization queue has a data change flag, changed data of the virtual object may be synchronized to the second region.

The data change flag of the virtual object is combined with management of the synchronization queue, so that the object data of the virtual object is added to the synchronization queue and marked as a data change only when a change occurs, thereby avoiding meaningless data synchronization, reducing a transmission volume of irrelevant data, and improving efficiency of data synchronization. In addition, when a synchronized data volume is reduced, the client can receive and process data more quickly, avoiding a delay or frame stuttering caused by loading of excessive irrelevant data, which ensures that the user sees the latest data state, and enhances smoothness, real-time performance, and accuracy of interactive experience. In addition, data synchronization of a large quantity of virtual objects can be managed efficiently by using a synchronization mechanism based on a change flag, ensuring stable operation even as a game scale expands, thereby providing good scalability.

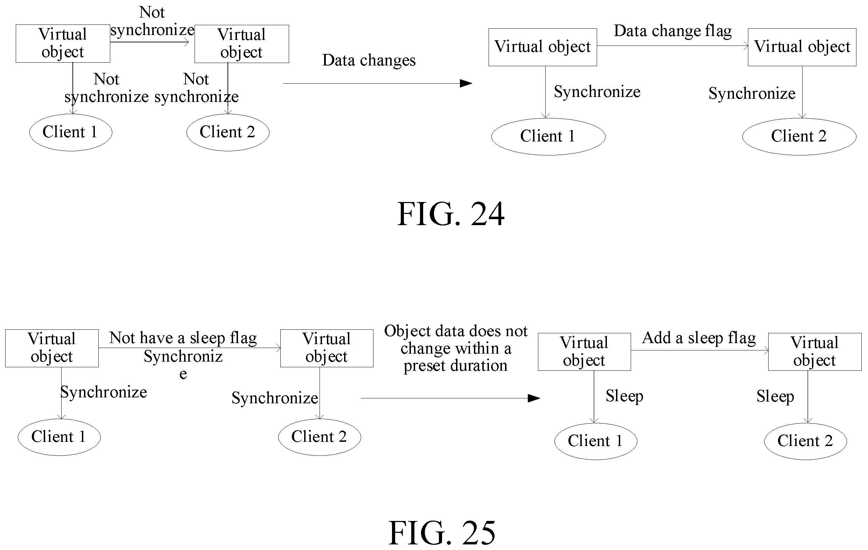

FIG. 24 is a schematic diagram of adding a data change flag to a virtual object to determine whether to synchronize changed data of the virtual object to a second region according to some embodiments of this application.

As shown in FIG. 24, when the server does not receive an operation instruction for the virtual object in the first region controlled by the client 1, no data change flag is added to the virtual object. Therefore, when the virtual object moves to the first position in the first region and is added to the second synchronization queue, the virtual object does not have a data change flag. When the virtual object in the second synchronization queue does not have a data change flag, the DS of the first region may not synchronize changed data of the virtual object to the client 1, and the DS corresponding to the first region may not synchronize the changed data of the virtual object to the DS of the second region either. Since the DS of the second region does not receive the changed data of the virtual object, the DS of the second region may not synchronize the changed data of the virtual object to the client 2 in the second region either.

When the server receives an operation instruction for the virtual object in the first region controlled by the client 1, a data change flag is added to the virtual object. Therefore, when the virtual object moves to the first position in the first region and is added to the second synchronization queue, the virtual object has a data change flag. When the virtual object in the second synchronization queue has a data change flag, the DS of the first region synchronizes changed data of the virtual object to the client 1, and the DS corresponding to the first region synchronizes the changed data of the virtual object to the DS of the second region either. The DS of the second region receives the changed data of the virtual object, and at the same time, the DS of the second region may also synchronize the changed data of the virtual object to the client 2 in the second region. Therefore, both the client 1 and the client 2 may receive changed data of the virtual object, and determine object data of the virtual object after the change based on the changed data and the object data of the virtual object before the change.

In this embodiment, when the object data of the virtual objects forming the virtual character is changed, the virtual object having a data change flag is added to the first synchronization queue, and when the virtual object moves to the first position, the data change flag is added together with the virtual object to the second synchronization queue, so that the DS of the first region synchronizes, only to the DS of the second region, the object data of the virtual object having the data change flag in the second synchronization queue. By using the method in this embodiment, the server no longer compares the object data of the virtual object in the current frame with the object data of the virtual object in the previous frame, and therefore computational consumption for determining the change status of the object data can be reduced.

Operation 2342: Not determine the change status of the object data of the virtual object when the virtual object in the second synchronization queue has a sleep flag.

Exemplarily, when a k^{th} virtual object in the second synchronization queue is traversed, if the k^{th} virtual object has a sleep flag, the operation of determining a change status of object data of the k^{th} virtual object is directly skipped, and a (k+1)^{th} virtual object is traversed. k is a positive integer.

When the k^{th} virtual object has the sleep flag, since the operation of determining a change status of object data of a virtual object is skipped, a calculation amount of determining a change status of object data of the k^{th} virtual object can be avoided, thereby improving calculation efficiency.

Operation 2341 and operation 2342 are alternative operations.

Operation 2350: Synchronize, when the change status indicates that the object data is changed, changed data of the virtual object to the second region.

For more content of operation 2350, refer to FIG. 11 and related descriptions thereof. Details are not described herein again.

FIG. 25 is a schematic diagram of adding a sleep flag to a virtual object to determine whether to synchronize changed data of the virtual object to a second region according to some embodiments of this application.

As shown in FIG. 25, the client 1 corresponding to the first region controls the virtual object in the first region. When the virtual object in the first synchronization queue and the second synchronization queue does not have a sleep flag, the DS of the first region synchronizes changed data of the virtual object to the client 1, and the DS of the first region synchronizes the changed data of the virtual object to the DS of the second region, so that the second region determines object data of the virtual object after the change based on the changed data and the object data of the virtual object before the change. Meanwhile, the DS of the second region synchronizes the changed data of the virtual object to the client 2 in the second region, so that a player of the client 2 can also see the virtual object after the change in the first region.

A sleep flag is added to the virtual object in the first synchronization queue when object data of the virtual object within a preset duration is not changed. When the virtual object in the first synchronization queue corresponding to the first region moves to the first position, the virtual object having the sleep flag is added to the second synchronization queue corresponding to the first region, and the virtual object in the second synchronization queue also has the sleep flag.

When the virtual object in the first synchronization queue and the second synchronization queue has a sleep flag, the DS of the first region may not synchronize changed data of the virtual object to the client 1, and the DS of the first region may not synchronize the changed data of the virtual object to the DS of the second region either. Since the DS of the second region does not receive the changed data of the virtual object, the DS of the second region may not synchronize the changed data of the virtual object to the client 2 either.

In this embodiment, when the object data of the virtual object is not changed within the preset duration, the virtual object having a sleep flag is added to the first synchronization queue corresponding to the first region. When a change occurs, the virtual object not having the sleep flag is added to the first synchronization queue corresponding to the first region, and the virtual object is added to the second synchronization queue. During synchronization of the changed data of the virtual object to the second region, if a traversed virtual object in the second synchronization queue has a sleep flag, the operation of determining a change status of the virtual object is skipped, which can avoid a calculation amount of determining the change status of the object data of the virtual object, thereby improving calculation efficiency.

Beneficial effects of using the method in this embodiment of this application are presented below based on experimental data.

By using the method in this embodiment of this application, logical information at a game logic level included in the DS layer is transparently transmitted to the large-world entity management layer, so that the large-world entity management layer can update the entities based on the logical information, which can greatly reduce a quantity of calculations performed by the large-world entity management layer. For example, according to experimental data, the quantity of calculations performed by the large-world entity management layer may be reduced to one over several tens of the original. For example, before transparent transmission of the logical information, the quantity of calculations performed by the large-world entity management layer is 50 to 100, and after the transparent transmission of the logical information, the quantity of the quantity of calculations performed by the large-world entity management layer is only 1 to 9.

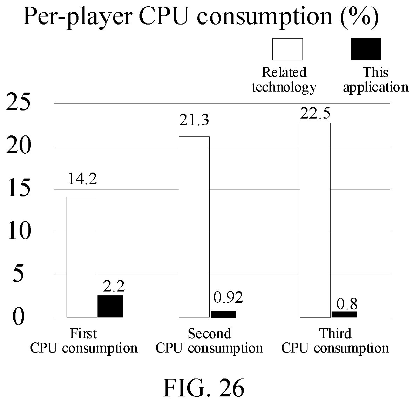

FIG. 26 is a schematic diagram of a significant reduction in CPU consumption when the method according to embodiments of this application is adopted, according to some embodiments of this application. By transparently transmitting the logical information at the game logic level included in the DS layer to the large-world entity management layer, experiments have proven that, compared with the related technology, the method provided in this application achieves a significant reduction in CPU consumption in the following three aspects: first CPU consumption for synchronizing the first character data in the Real state to the client, second CPU consumption for synchronizing the first character data in the Real state maintained in the first region to the second region, and third CPU consumption for synchronizing changed data of the first character data to the second region.

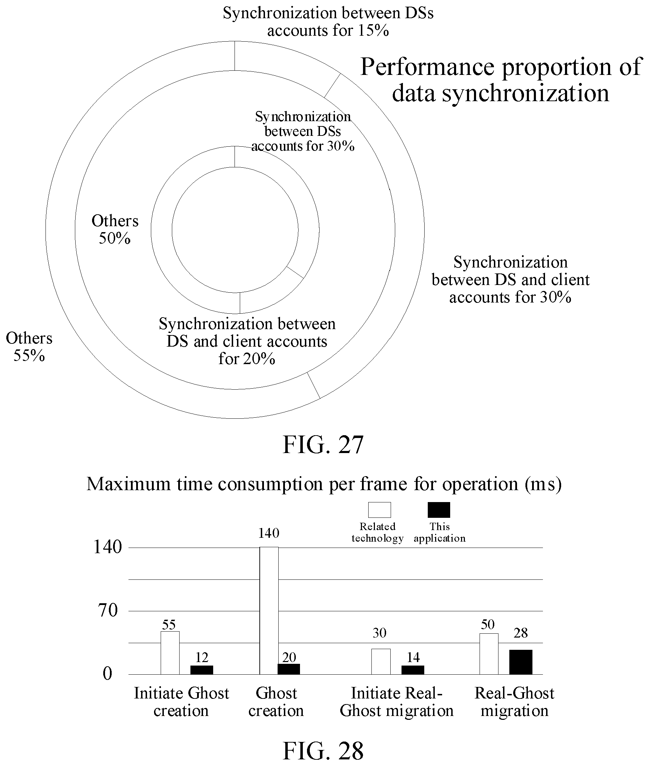

FIG. 27 is a schematic diagram of a performance proportion of data synchronization when the method according to embodiments of this application is adopted, according to some embodiments of this application. The circular ring of the inner circle represents a performance proportion of data synchronization in the related technology. In the inner circle, data synchronization between the DS and the client accounts for 20%, and data synchronization between the DSs accounts for 30%. Therefore, the performance proportion of the two types of data synchronization in the related technology is 50%. The circular ring of the outer circle represents a performance proportion of data synchronization in the embodiments of this application. In the outer circle, data synchronization between the DS and the client accounts for 30%, and data synchronization between the DSs accounts for 15%. Therefore, the performance proportion of the two types of data synchronization in this application is 45%. As can be seen, the performance proportion of data synchronization between the DSs significantly decreases from the original 1.5 times to 0.5 times, and the total performance proportion of the two types of data synchronization also decreases by 5%.

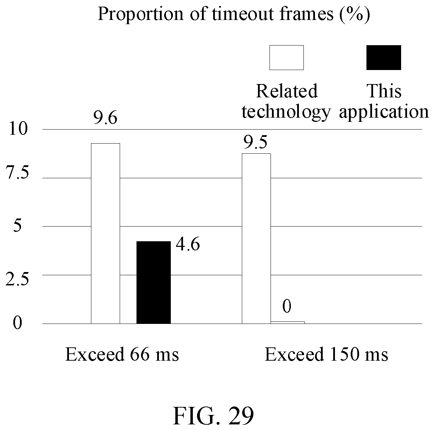

FIG. 28 is a schematic diagram of maximum time consumption per frame when the operations according to embodiments of this application are adopted, according to some embodiments of this application. According to bar chart data in FIG. 28, single-frame consumption of Ghost creation has dropped to about 20% of that in the related technology. Maximum time consumption per frame for Real-Ghost migration has dropped to about 50% of that in the related technology. FIG. 29 is a schematic diagram of a proportion of timeout frames when the method according to embodiments of this application is adopted under a stress test in which Ghost creation and Ghost deletion are frequently performed according to some embodiments of this application. As shown in FIG. 29, a proportion of timeout frames in the related technology is very high, frames above 66 ms account for nearly 10%, and most of these frames exceed 150 ms. However, after the method of this application is adopted, the proportion of frames with frame time exceeding 66 ms decreases to 5%, and there are no frames exceeding 150 ms.

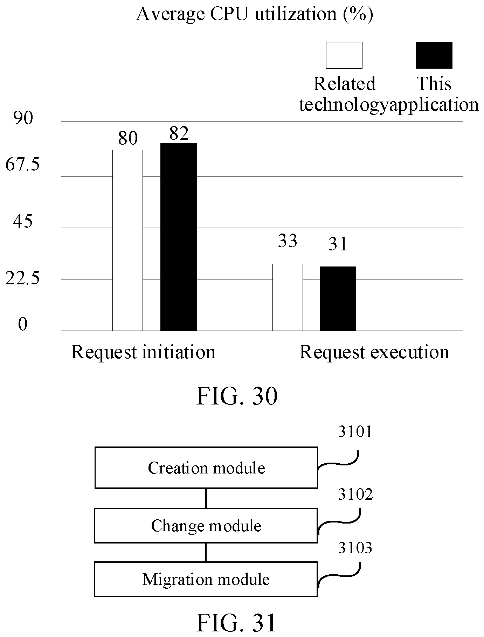

FIG. 30 is a schematic diagram of average CPU utilization when the method according to embodiments of this application is adopted, according to some embodiments of this application.

As can be seen from data comparison between average CPU utilization in the related technology and this application that the average CPU utilization of the DS remains basically unchanged, which indicates that the use of the method of this application does not cause additional CPU consumption.

As can be seen from the foregoing experimental results, the solution provided in this application may be well applied to data synchronization in high-frame-rate games.

FIG. 31 is a structural block diagram of a data synchronization apparatus according to some embodiments of this application. The apparatus includes:
a creation module 3101, configured to create, when a virtual character moves to a first position in a first region, second character data of the virtual character in a second region based on first character data of the virtual character in the first region by using at least two frame durations, the virtual character including at least two virtual objects, the first character data and the second character data each including object data respectively corresponding to the at least two virtual objects, the first character data being in a first state, the second character data being in a second state, and the data in the second state being passively updated when the data in the first state is changed;
a change module 3102, configured to synchronize changed data of the virtual object to the second region when the first character data is changed, so that the second character data is synchronously changed based on the changed data; and
a migration module 3103, configured to: switch the first character data to the second state, and switch the second character data to the first state when the virtual character moves to a second position in the second region.

In some embodiments, the creation module 3101 is configured to: determine creation priorities of the object data respectively corresponding to the at least two virtual objects, the creation priorities being configured for representing priorities for creating the object data from the first character data into the second region; and create, according to the creation priorities and by using the at least two frame durations, the second character data in the second region based on the first character data.

In some embodiments, the creation module 3101 is configured to: determine the creation priorities according to visibility of the virtual objects, where the creation priority of the object data corresponding to a visible virtual object is higher than that of the object data corresponding to an invisible virtual object, the visible virtual object is the virtual object effectively observed, and the invisible virtual object is the virtual object not effectively observed; create, according to the creation priorities and by using a first frame duration, the object data of the visible virtual object in the second region based on the object data of the visible virtual object in the first character data; and when creation of the object data of the visible virtual object is completed, creating, by using a second frame duration, the object data of the invisible virtual object in the second region based on the object data of the invisible virtual object in the first character data, the at least two frame durations including the first frame duration and the second frame duration.

In some embodiments, the creation module 3101 is configured to: determine, according to a movement speed of the virtual character, a movement duration for the virtual character to move from the first position to the second position; determine, according to a preset frame rate, the movement duration, and a quantity of the invisible virtual object, a creation rate of the object data of the invisible virtual object, the creation rate being configured for representing a quantity of the object data of the invisible virtual object created within a single frame duration; and create, according to the creation rate and by using the second frame duration, the object data of the invisible virtual object in the second region based on the object data of the invisible virtual object in the first character data.

In some embodiments, the migration module 3103 is configured to: switch the first character data to the second state, and switch the second character data to the first state when the virtual character moves to the second position in the second region and creation of the second character data of the virtual character in the second region is fully completed; fully synchronize the first character data of the virtual character in the first region to the second region when the virtual character moves to the second position in the second region and creation of the second character data of the virtual character in the second region is not fully completed; and switch the first character data to the second state, and switch the second character data of the virtual character in the second region after the full synchronization to the first state when the full synchronization is completed.

In some embodiments, the creation module 3101 is configured to: perform level-order traversal on the at least two virtual objects according to an attach relationship between the at least two virtual objects, to obtain a level-order traversal sequence; determine a sub-sequence, which includes all visible virtual objects and has a shortest sequence length, in the level-order traversal sequence as a first sub-sequence; determine the creation priority of the virtual objects in the first sub-sequence as a first priority; and determine the creation priority of the virtual objects in a second sub-sequence as a second priority, where the second sub-sequence is a sequence formed by the virtual objects outside the first sub-sequence, and the first priority is higher than the second priority.

In some embodiments, the creation module 3101 is configured to: for the visible virtual object among the at least two virtual objects, modify, based on the attach relationship between the at least two virtual objects, a virtual object on which the visible virtual object depends to a visible state; determine the creation priority of the visible virtual object among the virtual objects as a first priority; and determine the creation priority of the invisible virtual object among the virtual objects as a second priority, the first priority being higher than the second priority.

In some embodiments, the creation module 3101 is configured to: improve, when a first virtual object switches from an invisible state to a visible state, the creation priority of the object data of the first virtual object; and create, according to the improved creation priority of the object data of the first virtual object, the object data of the first virtual object in the second region based on the object data of the first virtual object in the first character data.

In some embodiments, the apparatus further includes a deletion module, configured to: determine the deletion priorities according to visibility of the virtual objects, where the deletion priority of the object data of a visible virtual object is higher than the deletion priority of the object data of an invisible virtual object; delete, according to the deletion priorities and by using a single frame duration, the object data of the visible virtual object in the first region; and, delete, by using at least one frame duration, the object data of the invisible virtual object in the first region when deletion of the object data of the visible virtual object is completed.

In some embodiments, the apparatus further includes an entity update module, configured to: update, in a large-world entity management layer, position information of a primary entity corresponding to a primary virtual object in the virtual character when a movement instruction for the virtual character is received, where the virtual character includes the primary virtual object and at least one secondary virtual object, the secondary virtual object depends on the primary virtual object, and the large-world entity management layer is configured to manage entities respectively corresponding to the at least two virtual objects; and update, in the large-world entity management layer, position information of a secondary entity corresponding to the secondary virtual object according to the position information of the primary entity corresponding to the primary virtual object.

In some embodiments, the entity update module is configured to: determine a movable virtual object and an immovable virtual object in a virtual environment; update, in a large-world entity management layer, position information of an entity corresponding to the movable virtual object when a movement instruction for the movable virtual object is received, the large-world entity management layer being configured to manage entities respectively corresponding to the at least two virtual objects; and skip updating, in the large-world entity management layer, an entity corresponding to the immovable virtual object when a movement instruction for the immovable virtual object is received.

In some embodiments, the apparatus further includes a queue module. Before creating second character data of the virtual character in the second region, the queue module is configured to add, when the virtual character is located in the first region, the virtual objects forming the virtual character to a first synchronization queue corresponding to the first region, the object data of the virtual objects in the first synchronization queue being configured for synchronization to a client viewing the first region.

The creation module 3101 is configured to: add, if the virtual character corresponding to the virtual object in the first synchronization queue moves to the first position in the first region, the virtual object to a second synchronization queue corresponding to the first region, the object data of the virtual object in the second synchronization queue being configured for synchronization to the second region; and create the second character data of the virtual character in the second region based on the object data of the virtual object in the second synchronization queue by using the at least two frame durations.

In some embodiments, the change module 3102 is configured to: determine a change status of the object data of the virtual object when the virtual object in the second synchronization queue does not have a sleep flag, where the sleep flag is configured for representing that the object data of the virtual object is not changed within a preset duration; synchronize the changed data of the virtual object to the second region when the change status indicates that the object data is changed; and not determine the change status of the object data of the virtual object when the virtual object in the second synchronization queue has a sleep flag.

In some embodiments, the queue module is configured to: add, if the object data corresponding to the virtual objects forming the virtual character is not changed within the preset duration, the virtual object having the sleep flag to the first synchronization queue corresponding to the first region; and add, if the object data corresponding to the virtual objects forming the virtual character is changed within the preset duration, the virtual object not having the sleep flag to the first synchronization queue corresponding to the first region.

The creation module 3101 is configured to add the virtual object to the second synchronization queue corresponding to the first region, where the virtual object having the sleep flag in the first synchronization queue also has the sleep flag in the second synchronization queue.

In some embodiments, the queue module is configured to: add, when the object data corresponding to the virtual objects forming the virtual character is changed, the virtual object having a data change flag to the first synchronization queue corresponding to the first region; and add, when the object data corresponding to the virtual objects forming the virtual character is not changed, the virtual object not having the data change flag to the first synchronization queue corresponding to the first region.

The creation module 3101 is configured to add the virtual object to the second synchronization queue corresponding to the first region, where the virtual object having the data change flag in the first synchronization queue also has the data change flag in the second synchronization queue.

The change module 3102 is configured to synchronize the changed data of the virtual object to the second region when the virtual object in the second synchronization queue has the data change flag.

In view of the above, during creation of the second character data, the first character data is fully synchronized to the second region in a frame-splitting manner by using at least two frame durations, which can effectively avoid the problem of excessive processing pressure of the server caused by completion of full synchronization of a large amount of data within a short time (for example, within a single frame). In addition, a large amount of object data has been synchronized when the Ghost is created and data is changed (which is referred to as a forward frame-splitting mechanism). When the virtual character moves to the second position in the second region, a data volume needing to be synchronized for Real-Ghost migration is only changed data of the virtual object corresponding to the frame, and a data volume of the changed data is relatively small. As a result, a duration of data synchronization during the Real-Ghost migration may not exceed a single frame duration, thereby greatly avoiding the problems such as frame stuttering caused by data synchronization lasting for several frames.

The data synchronization apparatus provided in the foregoing embodiments is only described by using division of the foregoing functional modules as an example. During actual application, the foregoing functions may be allocated to and completed by different functional modules according to requirements. That is, the internal structure of the device is divided into different functional modules, to complete all or some of the functions described above. In addition, the data synchronization apparatus provided in the foregoing embodiment belongs to the same concept as the data synchronization method in the foregoing embodiments. For an implementation process thereof, refer to the method embodiments. Details are not described herein again.

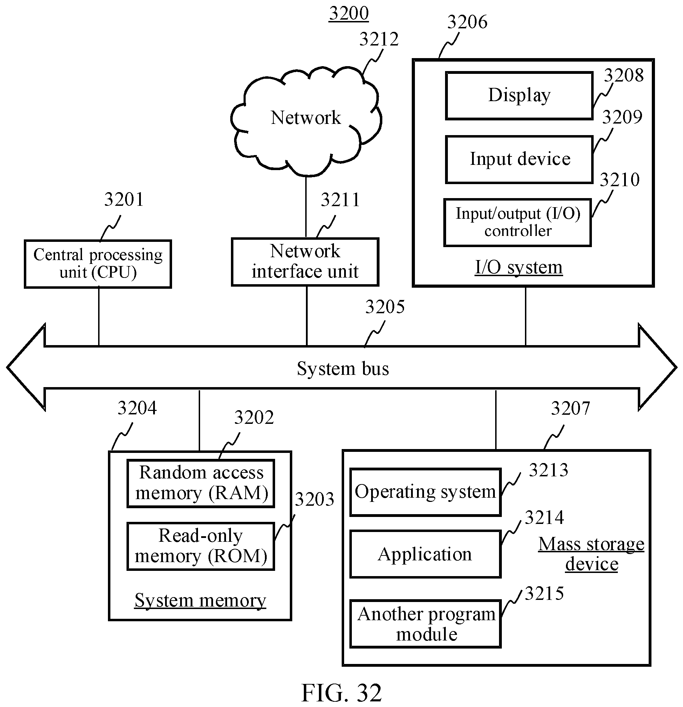

FIG. 32 is a schematic structural diagram of a server according to some embodiments of this application.

Illustratively, a server 3200 includes a CPU 3201, a system memory 3204 including a random access memory (RAM) 3202 and a read-only memory (ROM) 3203, and a system bus 3205 connecting the system memory 3204 and the CPU 3201. The server 3200 further includes a basic input/output system (I/O system) 3206 assisting in transmitting information between components in a computer, and a mass storage device 3207 configured to store an operating system 3213, an application 3214, and another program module 3215. The basic I/O system 3206 includes a display 3208 configured to display information and an input device 3209, such as a mouse or a keyboard, for the user to input information. The display 3208 and the input device 3209 are both connected to the CPU 3201 by using an I/O controller 3210 connected to the system bus 3205. The basic I/O system 3206 may further include the I/O controller 3210 to receive and process input from a plurality of other devices such as a keyboard, a mouse, and an electronic stylus. Similarly, the I/O controller 3210 further provides an output to a display screen, a printer, or another type of output device. The mass storage device 3207 is connected to the CPU 3201 by using a mass storage controller (not shown) connected to the system bus 3205. The mass storage device 3207 and a computer-readable medium associated therewith provide non-volatile storage for the server 3200.

Without loss of generality, the computer-readable medium may include a computer storage medium and a communication medium. The computer storage medium includes volatile and non-volatile media and removable and non-removable media implemented by using any method or technology configured for storing information such as a computer-readable instruction, a data structure, a program module, or other data. The memory stores one or more programs, the one or more programs are configured to be executed by one or more CPUs 3201, the one or more programs include instructions configured for implementing the foregoing methods, and the CPU 3201 executes the one or more programs to implement the methods provided in the foregoing method embodiments. According to various embodiments of this application, the server 3200 may further be connected, by using a network such as the Internet, to a remote computer on the network and run. That is, the server 3200 may be connected to a network 3212 by using a network interface unit 3211 connected to the system bus 3205. The memory further includes one or more programs, the one or more programs are stored in the memory, and the one or more programs include operations configured for performing the method provided in the embodiments of this application and performed by the server. An embodiment of this application further provides a computer-readable storage medium. The computer-readable storage medium stores at least one computer instruction. The at least one computer instruction is loaded and executed by a processor to implement the methods in the foregoing embodiments. In some embodiments, the computer-readable storage medium may include: a RAM, a ROM, a solid state drive (SSD), an optical disc, or the like. An embodiment of this application further provides a computer program product or computer program. The computer program product or computer program includes a computer instruction. The computer instruction is stored in a computer-readable storage medium. A processor of a server reads the computer instruction from the computer-readable storage medium, and the processor executes the computer instruction, causing the server to perform the method provided in various implementations of the foregoing aspects.

The foregoing descriptions are merely exemplary embodiments of this application, but are not intended to limit this application. Any modification, equivalent replacement, or improvement made within the spirit and principle of this application shall fall within the protection scope of this application.

## Claims

1. A method for synchronizing character data of a virtual character across regions in a virtual world, performed by a computer device, the method comprising:
when the virtual character moves to a first position in a first region of the virtual world, synchronizing first character data of the virtual character in the first region to a second region adjacent to the first region to create second character data of the virtual character in the second region, wherein the first character data is in a first state and the second character data is in a second state, and the synchronization is distributed across at least two render frame cycles;
when the first character data in the first region changes, synchronizing changed data in the first character data to the second region so that the second character data is synchronously changed based on the changed data in the first character data; and
when the virtual character moves to a second position in the second region, switching the first character data to the second state and the second character data to the first state, respectively.

2. The method according to claim 1, wherein the virtual character is composed of at least two virtual objects, the synchronization is distributed across at least two render frame cycles by: selecting at least one virtual object from among the at least two virtual objects, and synchronizing object data of the selected at least one virtual object over a first part of the at least two render frame cycles, and synchronizing object data of remaining virtual objects over a remaining part of the at least two render frame cycles;
wherein the selecting at least one virtual object from among the at least two virtual objects comprises:
determining synchronization priorities of the object data respectively corresponding to the at least two virtual objects; and
selecting, according to the synchronization priorities, the at least one virtual object from among the at least two virtual objects.

3. The method according to claim 1 or 2, wherein the determining the synchronization priorities of the object data respectively corresponding to the at least two virtual objects comprises:
determining the synchronization priorities according to visibility of the at least two virtual objects, wherein the object data corresponding to a visible virtual object has a higher priority than that of the object data corresponding to an invisible virtual object; and
the at least two virtual objects comprises at least one visible virtual object and at least one invisible virtual object; the selecting at least one virtual object from among the at least two virtual objects comprises:
selecting the at least one visible virtual object from among the at least of two virtual objects;
the synchronizing the object data of the selected at least one virtual object over the first part of the at least two render frame cycles, and synchronizing the object data of the remaining virtual objects over the remaining part of the at least two render frame cycles comprises:
synchronizing the object data of the at least one visible virtual object over the first part of the at least two render frame cycles, and synchronizing the object data of the at least one invisible virtual object over the remaining part of the at least two render frame cycles.

4. The method according to any one of claims 1 to 3, wherein the synchronizing the object data of the at least one invisible virtual object over the remaining part of the at least two render frame cycles comprises:
determining, according to a movement speed of the virtual character, a movement time for the virtual character to move from the first position to the second position;
determining, according to a preset frame rate, the movement time, and a quantity of the at least one invisible virtual object, a synchronization rate of the object data of the at least one invisible virtual object, the synchronization rate representing a quantity of invisible virtual objects whose object data is synchronized within one render frame cycle; and
synchronizing, according to the synchronization rate, the object data of the at least one invisible virtual object over the remaining part of the at least two render frame cycles.

5. The method according to any one of claims 1 to 4, wherein the switching the first character data to the second state and the second character data to the first state respectively comprises:
when the virtual character moves to the second position in the second region and synchronization of the second character data of the virtual character to the second region is fully completed, switching the first character data to the second state and switching the second character data to the first state; and
the method further comprises:
when the virtual character moves to the second position in the second region and synchronization of the second character data of the virtual character to the second region is not fully completed, fully synchronizing the first character data of the virtual character in the first region to the second region; and after the full synchronization is completed, switching the first character data to the second state and switching the second character data in the second region.

6. The method according to any one of claims 1 to 5, wherein the determining the synchronization priorities according to the visibility of the virtual objects comprises:
traversing an attach relationship tree of the at least two virtual objects according to an attach relationship between the at least two virtual objects, to obtain a level-order traversal sequence, wherein the attach relationship tree represents attach relationships of the at least two virtual objects;
determining a first sub-sequence in the level-order traversal sequence, which comprises all visible virtual objects and has a shortest sequence length;
assigning a first synchronization priority for the virtual objects in the first sub-sequence; and
assigning a second synchronization priority to the virtual objects not in the first sub-sequence , wherein the first priority is higher than the second priority.

7. The method according to any one of claims 1 to 6, wherein the determining the synchronization priorities according to the visibility of the virtual objects comprises:
for each of the at least one visible virtual object among the at least two virtual objects, modifying, based on an attach relationship between the at least two virtual objects, an invisible virtual object on which the visible virtual object depends to a visible state; and
assigning a first priority for all virtual objects in the visible state; and
assigning a second priority for all virtual objects in an invisible state, the first priority being higher than the second priority.

8. The method according to any one of claims 1 to 7, wherein the virtual character is composed of at least two virtual objects, the method further comprises:
when a first virtual object among the at least two virtual objects switches from an invisible state to a visible state, raising the priority of the object data of the first virtual object; and
synchronizing, according to the raised priority, the object data of the first virtual object from the first region to the second region.

9. The method according to any one of claims 1 to 8, further comprising:
determining deletion priorities of the object data respectively corresponding to the at least two virtual objects, the deletion priorities representing priorities for deleting the object data in the first character data; and
distributing, according to the deletion priorities, deletion of the first character data of the virtual character in the first region across another at least two render frame cycles when the virtual character moves to a third position in the second region.

10. The method according to any one of claims 1 to 9, wherein the determining the deletion priorities of the object data respectively corresponding to the at least two virtual objects comprises:
determining the deletion priorities according to visibility of the virtual objects, wherein a deletion priority of the object data of a visible virtual object is higher than that of the object data of an invisible virtual object; and
the distributing, according to the deletion priorities, the deletion of the first character data of the virtual character in the first region across another at least two render frame cycles comprises:
deleting, according to the deletion priorities, the object data of the visible virtual object in the first region over one render frame cycle of the another at least two render frame cycles; and
deleting the object data of the invisible virtual object in the first region when deletion of the object data of the visible virtual object is completed.

11. The method according to any one of claims 1 to 10, wherein the virtual character is composed of at least two virtual objects, and the at least two virtual objects comprise a primary virtual object and a second virtual object attached to the primary virtual object, the method further comprising:
when a movement instruction for the virtual character is received, updating, in a large-world entity management layer, position information of a primary entity corresponding to the primary virtual object , wherein and the large-world entity management layer is configured to manage entities respectively corresponding to the at least two virtual objects; and
updating, in the large-world entity management layer, position information of a secondary entity corresponding to the secondary virtual object according to the position information of the primary entity corresponding to the primary virtual object.

12. The method according to any one of claims 1 to 11, further comprising:
determining a movable virtual object and an immovable virtual object in a virtual environment;
when a movement instruction for the movable virtual object is received, updating, in a large-world entity management layer, position information of an entity corresponding to the movable virtual object, the large-world entity management layer being configured to manage entities respectively corresponding to the at least two virtual objects; and
when a movement instruction for the immovable virtual object is received, skipping updating, in the large-world entity management layer, an entity corresponding to the immovable virtual object .

13. The method according to any one of claims 1 to 12, wherein the virtual character is composed of at least two virtual objects, the method further comprising:
when the virtual character enters the first region, adding the at least two virtual objects to a first synchronization queue corresponding to the first region, the object data of the at least two virtual objects in the first synchronization queue being configured for synchronization to a client viewing the first region; and
when the virtual character moves to the first position in the first region, adding the at least two virtual objects to a second synchronization queue corresponding to the first region, the object data of the at least two virtual objects in the second synchronization queue being configured for synchronization to the second region; and
synchronizing the first character data of the virtual character to the second region based on the object data of the at least two virtual objects in the second synchronization queue across the at least two render frame cycles.

14. The method according to any one of claims 1 to 13, wherein the synchronizing the changed data in the first region to the second region when the first character data changes comprises:
traversing each virtual object in the second synchronization queue, determining a change status of the object data of the virtual object if the virtual object does not have a sleep flag, wherein the sleep flag indicates that the object data of the virtual object does not change within a preset duration; and
synchronizing the changed data of the virtual object to the second region if the change status indicates that the object data changes.

15. The method according to any one of claims 1 to 14, wherein the adding the at least two virtual objects to the first synchronization queue corresponding to the first region comprises:
for each of the at least two virtual objects:
adding, if the object data corresponding to the virtual object does not change within a preset duration, the virtual object with a sleep flag to the first synchronization queue corresponding to the first region; and
adding, if the object data corresponding to the virtual object changes within the preset duration, the virtual object without the sleep flag to the first synchronization queue corresponding to the first region; and
the adding the at least two virtual objects to the second synchronization queue corresponding to the first region comprises:
for each of the at least two virtual objects:
adding the virtual object to the second synchronization queue corresponding to the first region, wherein the virtual object in the second synchronization queue also has the sleep flag if it has the sleep flag in the first synchronization queue.

16. The method according to any one of claims 13 to 15, wherein the adding the at least two virtual objects to the first synchronization queue corresponding to the first region comprises:
for each of the at least two virtual objects:
adding, if the object data corresponding to the virtual object changes, the virtual object with a data change flag to the first synchronization queue corresponding to the first region; and
adding, if the object data corresponding to the virtual object does not change, the virtual object without the data change flag to the first synchronization queue corresponding to the first region;
the adding the at least two virtual objects to the second synchronization queue corresponding to the first region comprises:
for each of the at least two virtual objects:
adding the virtual object to the second synchronization queue corresponding to the first region, wherein the virtual object in the second synchronization queue also has the data change flag if it has the data change flag in the first synchronization queue.

17. An apparatus for synchronizing character data of a virtual character across regions in a virtual world, the apparatus comprising:
a creation module, configured to synchronize, when a virtual character moves to a first position in a first region of the virtual world, first character data of the virtual character in the first region to a second region adjacent to the first region to create second character data of the virtual character in the second region, wherein the first character data is in a first state and the second character data is in a second state, the synchronization is distributed across at least two render frame cycles;
a change module, configured to synchronize, when the first character data in the first region changes, changed data in the first character data to the second region so that the second character data is synchronously changed based on the changed data in the first character data; and
a migration module, configured to switch the first character data to the second state the second character data to the first state respectively when the virtual character moves to a second position in the second region.

18. A server, the server comprising a processor and a memory; the memory storing at least one computer instruction, and the at least one computer instruction being configured for being executed by the processor to implement the method according to any one of claims 1 to 16.

19. A computer-readable storage medium, the computer-readable storage medium storing at least one computer instruction, and the computer instruction being loaded and executed by a processor to implement the method according to any one of claims 1 to 16.

20. A computer program product, the computer program product comprising a computer instruction, and the computer instruction being stored in a computer-readable storage medium; a processor of a server reading the computer instruction from the computer-readable storage medium, and the processor executing the computer instruction, causing the server to perform the method according to any one of claims 1 to 16.
